(19) Europäisches Patentamt
European Patent Office
Office européen des brevets

(11) **EP 2 721 105 B1**

(12) **EUROPÄISCHE PATENTSCHRIFT**

(45) Veröffentlichungstag und Bekanntmachung des Hinweises auf die Patenterteilung:
**24.10.2018 Patentblatt 2018/43**

(21) Anmeldenummer: **12726815.9**

(22) Anmeldetag: **12.06.2012**

(51) Int Cl.:
*C08L 23/28* (2006.01)       *C09D 4/06* (2006.01)
*C09J 4/06* (2006.01)        *C08L 33/06* (2006.01)

(86) Internationale Anmeldenummer:
**PCT/EP2012/061129**

(87) Internationale Veröffentlichungsnummer:
**WO 2012/171924 (20.12.2012 Gazette 2012/51)**

(54) **PRIMER ZUR VERBESSERUNG DER ADHÄSION VON KLEBEBÄNDERN AUF SCHWER VERKLEBBAREN KUNSTSTOFFEN UND METALLEN**

PRIMER FOR IMPROVING THE ADHESION OF ADHESIVE TAPES ON PLASTICS AND METALS WHICH ARE DIFFICULT TO BOND

APPRÊT POUR AMÉLIORER L'ADHÉRENCE DE BANDES ADHÉSIVES SUR DES PLASTIQUES ET MÉTAUX DIFFICILES À COLLER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2011 DE 102011077510**

(43) Veröffentlichungstag der Anmeldung:
**23.04.2014 Patentblatt 2014/17**

(73) Patentinhaber: **tesa SE**
**22848 Norderstedt (DE)**

(72) Erfinder:
• SCHÜMANN, Uwe
  25421 Pinneberg (DE)
• WEILAND, Kirstin
  21035 Hamburg (DE)
• ELLRINGMANN, Kai
  22589 Hamburg (DE)
• KUPSKY, Marco
  25451 Quickborn (DE)

(56) Entgegenhaltungen:
JP-A- 57 198 763       JP-A- 58 032 661
US-A1- 2011 081 535

**Beschreibung**

Die vorliegende Erfindung betrifft eine Primer-Zusammensetzung für die Verbesserung der Adhäsion von Klebebändern auf schwer verklebbaren Substraten, insbesondere auf verzinktem Stahl sowie auf thermoplastischen Elastomeren auf Olefinbasis, wie zum Beispiel PP/EPDM.

Stand der Technik

Primer, oft auch Haftvermittler oder Adhesion Promoter genannt, sind vielfach in Form von kommerziellen Produkten oder aus der technischen Literatur bekannt. Eine Übersicht über die in Primer-Formulierungen verwendbaren Stoffe bzw. Stoffklassen findet sich in J.Bielemann, Lackadditive (1998), Kap. 4.3., S.114-129.

Primerzusammensetzungen werden in einer Vielzahl von Patentschriften offenbart, jedoch werden nur in wenigen Schriften Primer beschrieben, mit denen eine Haftungsverbesserung von Klebebändern erreicht werden soll.

In der Schrift WO 2008/094721 A1 wird im Zusammenhang mit Klebebandanwendungen eine Primerzusammensetzung auf Basis eines maleinsäureanhydridmodifizierten Polyolefins und eines organischen Diamins vorgeschlagen, mit der eine Haftungsverbesserung auf polyolefinbasierten Materialien erzielt werden soll.

In der JP 2008-156566 A wird für Klebebandanwendungen eine Primerzusammensetzung auf Basis eines azidischen Acrylat-Polymers und eines fluorhaltigen Copolymers offenbart.

Zur Verbesserung der Haftung eines Klebebandes auf melaminharzangestrichenen Substraten schlägt die WO 02/100961 A1 eine Primerzusammensetzung vor, die ein gepfropftes Copolymer eines Acrylat-Copolymers, gepfropft mit einer Aminoalkylgruppe, die endständige primäre Aminogruppen enthält, weiterhin ein Acrylat-Copolymer mit Carboxylgruppen in der molekularen Kette und ein Lösungsmittel enthält.

Die WO 03/052021 A1 beschreibt eine Primerzusammensetzung, die ein Polydiorganosiloxan-Polyharnstoff mit elektronenreichen Gruppen enthält und die Gestalt eines Primers, eines Klebstoffs, eines Haftklebstoffs oder eines anderen Beschichtungsstoffes haben kann. Auch diese Primerzusammensetzung wird in Zusammenhang mit Klebebandanwendungen genannt.

In den Schriften EP 833 865 B1, EP 833 866 B1, EP 739 383 B1 und US 5,602,202 werden Primerzusammensetzungen auf Basis von Mischungen aus Styrol- / Dien-Blockcoplymeren oder Styrol- / hydriertem Dien-Blockcopolymeren und ausgewählten Polyacrylaten beschrieben, die die Haftung von beidseitig haftklebrigen geschäumten Klebebändern auf sowohl niederenergetischen als auch höherenergetischen Oberflächen verbessern sollen.

Für den Gebrauch als Primerschicht innerhalb eines Klebebandes beschreibt die WO 03/035779 A eine Primerzusammensetzung auf Basis eines maleinierten thermoplastischen Elastomers, eines nicht-halogenierten Polyolefins und eines Harzes.

JP 57 198763 A beschreibt eine Primerzusammensetzung auf Basis eines Copolymers aus Acrylat und einem α-β-ungesättigten Monomer und einem chlorierten Polyolefin.

JP 58 032661 A beschreibt ein eine Primerzusammensetzung auf Basis eines Acrylatpolymers und einem chlorierten Polyolefin, die in einem spezifischen Verhältnis zueinander stehen.

Mit den beschriebenen Primerzusammensetzungen kann zwar die Haftung von Klebebändern auf bestimmten Substraten verbessert werden, jedoch ist kein Primer bekannt, der einerseits die Haftung von Klebebändern so stark verbessert, dass die Klebebänder nach einer Verklebungszeit von drei oder mehr Tagen nur unter eigener Zerstörung oder Zerstörung des Substrats vom Substrat entfernt werden können und andererseits noch für eine gewisse kurze Zeit nach der Applikation, zum Beispiel für eine Zeit von bis zu drei Minuten, eine adhäsive Ablösung und gegebenenfalls Repositionierung eines Klebebandes ermöglicht, insbesondere eines Klebebandes, das eine geschäumte oder schaumartige Elastomerschicht enthält und für dauerhafte, klebstarke Verbindungen konzipiert ist. Insbesondere ist kein Primer bekannt, mit dem dieser Effekt bei Klebebandapplikationen sowohl einerseits auf verzinktem Stahl als auch andererseits auf thermoplastischen Elastomeren auf Olefinbasis, wie zum Beispiel PP/EPDM erreicht wird.

Neben den in Patentschriften beschriebenen Primern gibt es kommerzielle Produkte, wie zum Beispiel die 3M Primer 94® oder 4298 UV®, die die Aufgabe der Verbesserung der Haftung von Klebebändern auf schwer verklebbaren, insbesondere sowohl unpolaren Untergründen wie Kuststoffen auf Basis von Polypropylen/Ethylenpropylendienmonomeren (PP/EPDM) als auch Metallen wie verzinkten Stahl sehr gut erfüllen. Nachteilig ist aber auch hier, dass unmittelbar nach der Applikation eines Klebebandes auf dem mit dem Primer beschichteten Untergrund eine derart starke Haftung aufgebaut wird, dass ein Klebeband, insbesondere ein Klebeband, das eine geschäumte oder schaumartige Elastomerschicht enthält und für dauerhafte, klebstarke Verbindungen konzipiert ist, im Falle einer Fehlverklebung häufig nicht mehr zerstörungsfrei abgelöst und gegebenenfalls repositioniert werden kann.

Von einem Primer wird zwar in der Regel erwartet, dass er eine so optimale Haftung zwischen dem Untergrund und dem Klebeband vermittelt, dass es beim Versuch, das Klebeband wieder abzulösen, zu einem Spalten innnerhalb des Klebebandes, also zu einem Kohäsionsbruch und nicht zu einem adhäsiven Versagen zwischen Haftklebstoff und Primer oder zwischen Primer und Untergrund kommt, jedoch soll der Haftungsaufbau nicht in allen Anwendungsfällen unmittelbar nach der Klebebandapplikation so stark sein, dass das Klebeband schon in diesem Augenblick nicht mehr zerstörungsfrei ablösbar ist. Stattdessen wäre es oftmals wünschenswert, wenn der Haftungsaufbau so langsam verläuft, dass noch genügend Zeit bleibt, das Klebebband im Falle einer Fehlverklebung adhäsiv vom Untergrund abzulösen.

Es gibt kommerzielle Primer, die eine zerstörungsfreie Ablösung des Klebebandes zulassen, jedoch ist dann die Haftung auch längere Zeit nach dem Aufkleben des Klebebandes auf den mit solch einem Primer beschichteten Untergrund so gering, dass das Klebeband auch nach dieser Zeit noch adhäsiv, also zerstörungsfrei wieder abgelöst werden kann, was in vielen, insbesondere industriellen Anwendungsfällen unerwünscht ist.

Nachteilig an allen bekannten Primern ist weiterhin, dass sie keinen optimalen Schutz vor einer Feuchteunterwanderung sowie Korrosion gewährleisten. Im Falle von längerfristigen Feuchtwärmelagerungen oder Klimawechsellagerungen unter extremen Bedingungen, wie sie häufig in der Auto-, der Elektronik- und der Solarindustrie gefordert werden, zum Beispiel unter Einbeziehung von Temperaturen von 60 °C bis 90 °C bei gleichzeitiger relativer Luftfeuchtigkeit von 80 % bis 90 % kommt es in der Regel zu Feuchteunterwanderungen. Die Feuchte wandert dabei entweder zwischen den Untergrund und den Primer oder zwischen den Primer und den Haftklebstoff des Klebebandes oder zwischen beides. Die Folge ist, dass das Klebeband nicht mehr optimal haftet und sich in unerwünschter Weise adhäsiv ablösen lässt. Weiterhin kann es zu unerwünschter Korrosion kommen, zum Beispiel zu einer Zinkoxidbildung unter der Verklebungsfläche im Falle von verzinktem Stahl als Untergrund.

Aufgabe der Erfindung

Aufgabe der Erfindung ist die Bereitstellung eines Primers zur Verbesserung der Adhäsion von Klebebändern auf insbesondere verzinktem Stahl sowie auf thermoplastischen Elastomeren auf Olefinbasis. Vorteilhaft ist insbesondere die Eignung zur Verbesserung der Adhäsion von geschäumten oder schaumartigen elastomeren Klebebändern, insbesondere solchen mit einem Haftklebstoff auf Basis von thermisch vernetzten Copolymerisaten aus Acrylsäureestern und Acrylsäure, auf insbesondere verzinktem Stahl sowie auf thermoplastischen Elastomeren auf Olefinbasis, wie zum Beispiel PP/EPDM, aber auch auf anderen Substraten, insbesondere Kunststoffen wie zum Beispiel Acrylnitril-Butadien-Styrol-Copolymeren (ABS), Poylcarbonat (PC) Polyvinylchlorid (PVC) oder Polypropylen (PP). Das Klebeband sollte bevorzugt während eines Zeitraums von bis zu drei Minuten nach seiner Applikation auf dem mit dem Primer behandelten Substrat adhäsiv wieder ablösbar und gegebenfalls repositionierbar oder zumindest durch einen neuen Klebebandstreifen ersetzbar sein. Nach einer Zeit von drei oder mehr als drei Tagen nach der Klebebandapplikation auf dem mit dem Primer beschichteten Untergrund sollte das Klebeband überwiegend nur unter Zerstörung, das heißt unter innerer Klebebandspaltung, entweder durch kohäsive Spaltung innerhalb einer Schicht des Klebebandes, durch adhäsive Ablösung einer Schicht des Klebebandes von einer anderen oder durch Haftklebstoffspaltung ablösbar sein. Nach mehrwöchigen Feuchtwärmelagerungen oder Klimawechsellagerungen unter Einbeziehung von Temperaturen von 60 °C bis 90 °C bei gleichzeitiger relativer Luftfeuchtigkeit von größer oder gleich 80 % des auf den mit dem Primer beschichteten Untergrund aufgeklebten Klebebandes sollte sich das Klebeband überwiegend nur unter eigener Zerstörung ablösen lassen, und es sollte zu keinen oder zumindest geringerern Feuchteunterwanderungen kommen, als es mit den heute bekannten Primern der Fall ist.

Lösung der Aufgabe

Gelöst wird diese Aufgabe durch einen Primer, wie er im Hauptanspruch niedergelegt ist. Gegenstand der Unteransprüche sind dabei vorteilhafte Weiterbildungen des Primers, eine Verwendungsmöglichkeit sowie ein Verfahren zur Herstellung einer haftvermittelnden Schicht aus dem Primer.

Demgemäß betrifft die Erfindung einen Primer, umfassend eine in einem oder mehreren Lösemitteln gelöste oder dispergierte Mischung aus

I) einem Haftklebstoff, umfassend zumindest eine Basispolymerkomponente, erhältlich durch radikalische Copolymerisation folgender Monomere:

a) mindestens einem Acrylsäureester eines linearen, primären Alkohols mit einschließlich 2 bis einschließlich 10 Kohlenstoffatomen im Alkylrest des Alkohols,
b) mindestens einem Acrylsäureester eines verzweigten, nichtzyklischen Alkohols mit einschließlich 4 bis einschließlich 12 Kohlenstoffatomen im Alkylrest des Alkohols,
c) einschließlich 8 bis einschließlich 15 Masseprozent Acrylsäure, bezogen auf die Summe der Monomere,
d) optional bis zu einschließlich 10 Masseprozent weiterer copolymerisierbarer Monomere, bezogen auf die Summe der Monomere,

II) mindestens einem thermischen Vernetzer auf Basis eines Metallacetylacetonats, eines Metallalkoxids oder eines Alkoxy-Metallacetylacetonats und

III) mindestens einem chlorierten Polyolefin, das optional mit einer a, β-ungesättigten
Carbonsäure oder deren Anhydrid, insbesondere mit Maleinsäureanhydrid und / oder mit einem Acrylat modifiziert
sein kann,

wobei die Konzentration der Summe der thermischen Vernetzer bezogen auf die Summe der Basispolymerkomponenten
des Haftklebstoffs zwischen einschließlich 0,05 Masseprozent und einschließlich 5,0 Masseprozent beträgt und
das Verhältnis der Summe der Basispolymerkomponente [Komponente I] des Haftklebstoffs zu der Summe der chlorierten Polyolefine [Komponente III] in der Mischung im Bereich von 30 : 70 bis 95 : 5 Masseanteilen, bevorzugt im
Bereich von 40 : 60 bis 90 : 10 Masseanteilen, besonders bevorzugt im Bereich von 50 : 50 bis 80 : 20 Masseanteilen, liegt.

Nähere Beschreibung der Erfindung:

Unter einem Primer wird in dieser Schrift im Einklang mit DIN EN ISO 4618 ein Beschichtungsstoff zum Herstellen einer Grundbeschichtung verstanden. Allgemein wird ein Primer oder Beschichtungsstoff auf die Oberfläche
eines Substrates aufgetragen, danach kommt es zur Filmbildung durch Verdunsten des Lösemittels und / oder durch
einen anderen chemischen oder physikalischen Härtungs- oder Filmbildungsprozess, und anschließend kann auf die
so hergestellte Schicht ein weiterer, anderer Stoff, zum Beispiel ein Lack, eine Farbe, ein Klebstoff oder ein Klebeband
aufgebracht werden. Voraussetzung für eine haftvermittelnde Wirkung eines Primers ist, dass einerseits eine sehr gute
Haftung der Primerschicht zum Substrat, dessen Oberfläche in dieser Schrift auch als Untergrund bezeichnet wird,
erzielt wird, und andererseits auf der hergestellten Primerschicht der darauf aufzubringende weitere, andere Stoff ebenfalls sehr gut haftet.
Ein Lösemittel im Sinne dieser Schrift ist jede bekannte Flüssigkeit, die geeignet ist, die Mischung aus I), II)
und III) zu lösen oder zumindest fein zu verteilen. Bevorzugte erfindungegemäße Lösemittel sind organische Lösemittel,
wie zum Beispiel Alkohole, Ester, Ketone, aliphatische oder aromatische Kohlenwasserstoffe sowie halogenierte Kohlenwasserstoffe, um nur einige Beispiele zu nennen. Wasser oder andere anorganische Lösemittel sind ebenfalls vom
Erfindungsgedanken eingeschlossen.
Unter einer dispergierten Mischung wird in dieser Schrift eine feinverteilte, homogene Mischung verstanden.
Der Grad der Feinverteilung und Homogenität wird nicht streng definiert, er muss aber ausreichend sein, dass es nach
dem Beschichten zur Ausbildung einer geschlossenen Schicht kommt und die Größe der nicht auf molekularer Ebene
gelösten Agglomerate oder Aggregate genügend gering ist, dass die Funktion der Primerschicht als haftvermittelnde
Schicht gewährleistet ist.
Unter einem Haftklebstoff wird in dieser Schrift wie im allgemeinen Sprachgebrauch üblich ein Stoff verstanden,
der - insbesondere bei Raumtemperatur - dauerhaft klebrig sowie klebfähig ist. Charakteristisch für einen Haftklebstoff
ist, dass er durch Druck auf ein Substrat aufgebracht werden kann und dort haften bleibt, wobei der aufzuwendende
Druck und die Einwirkdauer dieses Drucks nicht näher definiert werden. In manchen Fällen, abhängig von der genauen
Art des Haftklebstoffs, der Temperatur und der Luftfeuchtigkeit sowie des Substrats reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.
Haftklebstoffe haben besondere, charakteristische viskoelastische Eigenschaften, die zu der dauerhaften Klebrigkeit und Klebfähigkeit führen.
Kennzeichnend für sie ist, dass, wenn sie mechanisch deformiert werden, es sowohl zu viskosen Fließprozessen
als auch zum Aufbau elastischer Rückstellkräfte kommt. Beide Prozesse stehen hinsichtlich ihres jeweiligen Anteils in
einem bestimmten Verhältnis zueinander, abhängig sowohl von der genauen Zusammensetzung, der Struktur und dem
Vernetzungsgrad des zu betrachtenden Haftklebstoffes als auch von der Geschwindigkeit und Dauer der Deformation
sowie von der Temperatur.
Der anteilige viskose Fluss ist zur Erzielung von Adhäsion notwendig. Nur die viskosen Anteile, hervorgerufen
durch Makromoleküle mit relativ großer Beweglichkeit, ermöglichen eine gute Benetzung und ein gutes Anfließen auf
das zu verklebende Substrat. Ein hoher Anteil an viskosem Fluss führt zu einer hohen Haftklebrigkeit (auch als Tack
oder Oberflächenklebrigkeit bezeichnet) und damit oft auch zu einer hohen Klebkraft. Stark vernetzte Systeme, kristalline
oder glasartig erstarrte Polymere sind mangels fließfähiger Anteile in der Regel nicht oder zumindest nur wenig haftklebrig.
Die anteiligen elastischen Rückstellkräfte sind zur Erzielung von Kohäsion notwendig. Sie werden zum Beispiel
durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine
Klebverbindung einer auf sie einwirkenden Dauerbelastung, zum Beispiel in Form einer dauerhaften Scherbelastung,
in ausreichendem Maße über einen längeren Zeitraum standhalten kann.
Zur genaueren Beschreibung und Quantifizierung des Maßes an elastischem und viskosem Anteil sowie des
Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert: G' = $(\tau/\gamma)$ •cos($\delta$) ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: G" = $(\tau/\gamma)$ •sin($\delta$) ($\tau$ = Schubspannung, $\gamma$ = Deformation, $\delta$ = Phasenwinkel = Phasenverschiebung zwischen Schubspannungs- und Deformationsvektor).

Ein Stoff gilt im Allgemeinen als haftklebrig und wird im Sinne dieser Schrift als haftklebrig definiert, wenn bei Raumtemperatur, hier definitionsgemäß bei 23 °C, im Deformationsfrequenzbereich von $10^0$ bis $10^1$ rad/sec, G' zumindest zum Teil im Bereich von $10^3$ bis 107 Pa liegt und wenn G" ebenfalls zumindest zum Teil in diesem Bereich liegt. Zum Teil heißt, dass zumindest ein Abschnitt der G'-Kurve innerhalb des Fensters liegt, das durch den Deformationsfrequenzbereich von einschließlich 10° bis einschließlich $10^1$ rad/sec (Abszisse) sowie den Bereich der G'-Werte von einschließlich $10^3$ bis einschließlich $10^7$ Pa (Ordinate) aufgespannt wird, und wenn zumindest ein Abschnitt der G"-Kurve ebenfalls innerhalb dieses Fensters liegt.

Das wesentliche Merkmal des im erfindungsgemäßen Primer enthaltenen Haftklebstoffs ist, dass dieser Haftklebstoff zumindest eine Basispolymerkomponente, erhältlich durch radikalische Copolymerisation folgender Monomere umfasst:

I)a) mindestens einem Acrylsäureester eines linearen, primären Alkohols mit 2 bis 10 Kohlenstoffatomen im Alkylrest des Alkohols,

I)b) mindestens einem Acrylsäureester eines verzweigten, nichtzyklischen Alkohols mit 4 bis 12 Kohlenstoffatomen im Alkylrest des Alkohols,

I)c) 8 bis 15 Masseprozent Acrylsäure, bezogen auf die Summe der Monomere,

I)d) optional bis zu 10 Masseprozent weiterer copolymerisierbarer Monomere, bezogen auf die Summe der Monomere,

wobei die Summe der Komponenten I)a) bis I)d) vorteilhaft - bei mehreren Basispolymerkomponenten jeweils - 100 Masseprozent der Basispolymerkomponente ausmachen.

Die zumindest eine Basispolymerkomponente - bzw. sofern mehrere Basispolymerkomponenten auf Basis der (Monomer-)Komponenten I)a) bis I)d) vorhanden sind, die Summe der Basispolymnerkomponenten - sollte mindestens 90 Masseprozent, bevorzugt mindestens 95 Masseprozent, besonders bevorzugt mindestens 98 Masseprozent des Haftklebstoffs [Komponente I] ausmachen und kann bis zu 100 Masseprozent des Haftklebstoffs ausmachen; das heißt, vorteilhaft sind nicht mehr als 10 Masseprozent, bevorzugt nicht mehr als 5 Masseprozent, besonders bevorzugt nicht mehr als 2 Masseprozent weitere Haftklebstoffbestandteile als die Basispolymerkomponenten vorhanden.

Weitere Haftklebstoffbestandteile können beispielsweise Harze, Weichmacher, Stabilisatoren, rheologische Additive, Füllstoffe, Initiatoren, Katalysatoren, Beschleuniger und dergleichen sein, wie sie dem Fachmann für Haftklebstoffe als Additive bekannt sind.

Ganz besondere Bedeutung kommt dabei dem mit 8 bis 15 Masseprozent hohen Anteil an Acrylsäure zu. Acrylsäure ist ein "hartes" Comonomer. Je höher der Anteil an Acrylsäure ist, desto höher wird die erwartete Glasübergangstemperatur des Copolymers sein.

Dies hat einen starken Einfluss auf die Eignung des Copolymers als Basispolymer für den im Primer enthaltenen Haftklebstoff. Durch die Copolymerisation sehr hoher Mengen an Acrylsäure kommt man leicht in den Bereich einer so hohen Glasübergangstemperatur des Copolymers, dass diese nahe an die Anwendungstemperatur (insbesondere also Raumtemperatur) herankommt oder diese sogar überschreitet, so dass der Einsatz als Basispolymer für die Haftklebstoff-Komponente des Primers eventuell nicht mehr möglich ist. Man versucht diesen Effekt zu kompensieren, indem als weitere Comonomere weiche Monomere eingesetzt werden, also solche Monomere, deren Glasübergangstemperaturen niedrig liegen, um die Glasübergangstemperatur des Copolymeren wieder nach unten zu drücken. Für die Berechnung der Glasübergangstemperaturen von Comonomeren wird im Stand der Technik die Fox- Gleichung (G1) (vgl. T.G. Fox, Bull. Am. Phys. Soc. 1 (1956) 123) als anwendbar beschrieben: In der Gleichung (G1) repräsentiert n die Laufzahl über die eingesetzten Monomere, $W_n$ den Massenanteil des jeweiligen Monomers n (Masseprozent) und TG,n die jeweilige Glasübergangstemperatur des Homopolymers aus den jeweiligen Monomeren n in K. Diese besagt, dass die Glasübergangstemperatur sich direkt mit dem Massenanteil der jeweils eingesetzten Comonomere verändert.

$$\frac{1}{T_G} = \sum_n \frac{w_n}{T_{G,n}} \qquad (G1)$$

Der Fachmann würde hiernach also erwarten, dass man die Glasübergangstemperatur dadurch am weitesten senken kann, dass man zu der Acrylsäure lediglich diejenige Monomersorte copolymerisiert, deren entsprechendes Homopolymere die niedrigsten Glasübergangstemperatur aufweist, und damit das Copolymer mit der besten Eignung als Basispolymerkomponente eines Haftklebstoffs erhält, der als Bestandteil eines Primers dienen soll.

Überraschenderweise wurde gefunden, dass der vorhergesagte Effekt die Realität nicht zufrieden stellend beschreibt. Es konnte festgestellt werden, dass ein Copolymer mit einer hohen Menge an Acrylsäure die beste Eignung als Basispolymerkomponente eines Haftklebstoffs, der als Bestandteil eines die gestellte Aufgabe lösenden Primers dient, erhält, wenn als weitere Comonomere mindestens ein linearer "weicher" Acrylester und mindestens ein verzweigter "weicher" Acrylester zu nicht unwesentlichen Masseanteilen vorhanden sind. Das wesentliche Merkmal des im erfindungsgemäßen Primer enthaltenen Haftklebstoffs ist daher, dass dieser Haftklebstoff zumindest eine Basispolymerkomponente, erhältlich durch radikalische Copolymerisation folgender Monomere umfasst:

a) mindestens einem Acrylsäureester eines linearen, primären Alkohols mit 2 bis 10 Kohlenstoffatomen im Alkylrest des Alkohols,
b) mindestens einem Acrylsäureester eines verzweigten, nichtzyklischen Alkohols mit 4 bis 12 Kohlenstoffatomen im Alkylrest des Alkohols,
c) 8 bis 15 Masseprozent Acrylsäure, bezogen auf die Summe der Monomere,
d) optional bis zu 10 Masseprozent weiterer copolymerisierbarer Monomere, bezogen auf die Summe der Monomere.

In einer besonders bevorzugten Ausgestaltung der Erfindung umfasst der Haftklebstoff nur eine Basispolymerkomponente, insbesondere vorteilhaft beschränkt sich die Basispolymerkomponente auf die Komponenten a) bis c), so dass der Basispolymerkomponente keine weiteren copolymerisierbaren Monomere außer linearen Acrylsäureestern mit 2 bis 10 C-Atomen im Alkylrest des Alkohols, verzweigten nichtzyklischen Acrylsäureestern mit 4 bis einschließlich 12 Kohlenstoffatomen im Alkylrest des Alkohols und 8 bis einschließlich 15 Masseprozent Acrylsäure, bezogen auf die Summe der Monomere, zugrunde liegen. Der Haftklebstoff als Bestandteil des erfindungsgemäßen Primers zeichnet sich dadurch aus, dass auf die Anwesenheit anderer - insbesondere weich machender - Comonomere und Komponenten als den genannten verzichtet werden kann. So kann beispielsweise vollständig auf Comonomere mit zyklischen Kohlenwasserstoffbausteinen verzichtet werden.

Lineare Alkylsäureester mit 2 bis 10 C-Atomen im Alkylrest sind Ethylacrylat, n-Propylacrylat, n-Butylacrylat, n-Pentylacrylat, n-Hexylacrylat, n-Heptylacrylat, n-Octylacrylat, n-Nonylacrylat, n-Decylacrylat.

Verzweigte nichtzyklische Acrylsäureester mit 4 bis einschließlich 12 Kohlenstoffatomen im Alkylrest des Alkohols werden bevorzugt ausgewählt aus der Gruppe bestehend aus 2-Ethylhexylacrylat (EHA), 2-Propylheptylacrylat, Isooctylacrylat, iso-Butylacrylat, isoAmylacrylat und/oder iso-Decylacrylat. Besonders vorteilhaft hat sich gezeigt, wenn als verzweigte nichtzyklische Acrylsäureester 2-Ethylhexylacrylat (EHA), 2-Propylheptylacrylat und/oder Isooctylacrylat (genauer: die Acrylsäureester, bei denen die Alkoholkomponente auf ein Gemisch primärer Isooctanole zurückzuführen ist, also auf solche Alkohole, die aus einem Isohepten-Gemisch durch Hydroformylierung u. anschließende Hydrierung gewonnen werden können) eingesetzt werden.

Sehr bevorzugt ist ein Haftklebstoff, dessen Basispolymer auf genau einem Monomer der Sorte a), einem Monomer der Sorte b) und Acrylsäure beruht, wobei besonders bevorzugt als Monomer der Sorte a) n-Butylacrylat und als Monomer der Sorte b) 2-Ethylhexylacrylat gewählt wird.

Mit dem Anteil an Acrylsäure in der Basispolymerkomponente lässt sich die Eignung im gewünschten Anwendungsbereich hervorragend einstellen. Mit zunehmendem Acrylsäureanteil nimmt die Leichtigkeit der sofortigen Wiederablösbarkeit zu, jedoch die Stärke des dauerhaften Haftungsaufbaus etwas ab.

Als optional bis zu 10 Masseprozent eingesetzte weitere copolymerisierbare Monomere können ohne besondere Einschränkung alle dem Fachmann bekannten radikalisch polymerisierbaren C=C-Doppelbindungs-haltigen Monomere oder Monomergemische verwendet werden. Beispielhaft genannte Monomere hierfür sind: Methylacrylat, Ethylacrylat, Propylacrylat, Methylmethacrylat, Ethylmethacrylat, Benzylacrylat, Benzylmethacrylat, sec.-Butylacrylat, tert-Butylacrylat, Phenylacrylat, Phenylmethacrylat, Isobornylacrylat, Isobornylmethacrylat, t-Butylphenylacrylat, t-Butylaphenylmethacrylat, Dodecylmethacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrylat, Phenoxyethylmethacrylat, 2-Butoxyethylmethacrylat, 2-Butoxy-ethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufuryl-acrylat, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4- Heptafluorobutylacrylat, 2,2,3,3,4,4,4 Heptafluorobutylmethacrylat, 2,2,3,3,4,4,5,5,6,6,7,7,8,8,8 Pentadecafluorooctylmethacrylat, Dimethylaminopropylacrylamid, Dimethylaminopropylmethacrylamid, N-(1-Methyl-undecyl)acrylamid, N-(n-Butoxymethyl)acrylamid, N-(Butoxymethyl)methacrylamid, N-(Ethoxymethyl)acrylamid, N-(n-Octadecyl) acrylamid, weiterhin N,N-Dialkyl-substituierte Amide, wie beispielsweise N,N-Dimethylacrylamid, N,N-Dimethylmethacrylamid, N-Benzylacrylamide, N-Isopropylacrylamid, N-tert-Butylacrylamid, N-tert-Octylacrylamid, N-Methylolacrylamid, NMethylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, $\alpha$- und p-Methylstyrol, $\alpha$-Butylstyrol, 4- n-Butylstyrol, 4-n-Decylstyrol, 3,4-Dimethoxystyrol. Makromonomere wie 2-Polystyrolethylmethacrylat (Molekulargewicht MW von 4000 bis 13000 g/mol), Poly(Methylmethacrylat)ethylmethacrylat (MW von 2000 bis 8000 g/mol).

Bei der Variation des Verhältnisses von linearem Acrylsäureester zu verzweigtem, nichtzyklischen Acrylsäureester hat sich gezeigt, dass der gewünschte Effekt der adhäsiven Wiederablösbarkeit des Klebbandes während eines Zeitraums von bis zu drei Minuten nach der Applikaton auf dem mit dem Primer behandelten Substrat und der aufgabengemäßen Haftvermittlung nach einer Zeit von drei oder mehr als drei Tagen nach der Klebebandapplikation auf dem mit dem Primer beschichteten Untergrund dann optimal gegeben ist, wenn das Verhältnis der Summe der Acrylsäureester eines linearen, primären Alkohols zu der Summe der Acrylsäureester eines verzweigten, nichtzyklischen Alkohols im Bereich von einschließlich 10 : 90 bis einschließlich 90:10 Masseanteilen, bevorzugt von einschließlich 20 : 80 bis einschließlich 80 : 20 liegt. Minderanteile sowohl an linearer Acrylsäureesterkomponente als auch an verzweigter Acrylsäureesterkomponente führen in Einzelfällen, abhängig vom jeweils verwendeten Klebeband, zu einer reduzierten haftvermittelnden Wirkung des Primers.

Die vorstehenden Ausführungen (Acrylsäureanteil, Verhältnis der Komponenten zueinander) gelten grundsätzlich für alle angegebenen linearen Acrylsäureester und verzweigten nichtzyklischen Acrylsäureester.

In einer vorteilhaften Ausführungsform des Haftklebstoffs als Bestandteil des erfindungsgemäßen Primers macht die Basispolymerkomponente mindestens 90 Masseprozent, bevorzugt mindestens 95 Masseprozent, besonders bevorzugt mindestens 98 Masseprozent des Haftklebstoffs aus, beziehungsweise machen die Basispolymerkomponenten in Summe mindestens 90 Masseprozent, bevorzugt mindestens 95 Masseprozent, besonders bevorzugt mindestens 98 Masseprozent des Haftklebstoffs aus, sofern mehr als ein Basispolymer vorhanden ist. In einer besonders vorteilhaften Ausführungsform besteht der Haftklebstoff ausschließlich aus der vernetzten Basispolymerkomponente bzw. aus den vernetzten Basispolymerkomponenten.

Weiterhin hat sich gezeigt, dass die aufgabengemäße Haftvermittlung nach einer Zeit von drei oder mehr als drei Tagen nach der Klebebandapplikation auf dem mit dem Primer beschichteten Untergrund dann optimal gegeben ist, wenn der Primer frei von Blockcopolymeren des Typs Polystyrol/Polydien oder Polystyrol/hydriertes Polydien ist. Unter Blockcopolymeren des Typs Polystyrol/Polydien oder Polystyrol/hydriertes Polydien sind im Sinne dieser Schrift alle Polymere zu verstehen, deren Moleküle aus verknüpften Blöcken aus Polystyrol- und Polydien-Einheiten oder hydrierten oder teilhydrierten Polydien-Einheiten bestehen. Typische Beispiele für Polydien- sowie hydrierte oder teilhydrierte Polydien-Einheiten sind Polybutadien-, Polyisopren-, Ethylen-/Butylen- oder Ethylen-/Propylen-Blöcke.

Erfindungsgemäß enthält der Primer mindestens einen thermischen Vernetzer auf Basis eines Metallacetylacetonats, eines Metallalkoxids oder eines Alkoxy-Metallacetylacetonats, wobei die Konzentration der Summe der thermischen Vernetzer bezogen auf die Summe der Basispolymerkomponenten des Haftklebstoffs zwischen 0,05 Masseprozent und einschließlich 5,0 Masseprozent beträgt. Geringere Konzentrationen führen zu einer zu geringen Vernetzung des Haftklebstoffs, die sich in einer adhäsiven Wiederablösbarkeit des Klebebandes nach längerer Verklebungszeit äußert. Höhere Konzentrationen führen zu einer zu starken Vernetzung des Haftklebstoffs, die sich ebenfalls in einer adhäsiven Wiederablösbarkeit des Klebebandes nach längerer Verklebungszeit äußert.

Der Begriff "thermische Vernetzer" bezieht sich darauf, dass der Vernetzer durch Temperatureinwirkung die chemische Vernetzungsreaktion oder gegebenfalls die Vernetzungsreaktionen eingeht oder initiiert und nicht durch Strahlungseinwirkung. Die Vernetzungsreaktionen in dieser Erfindung werden also weder durch aktinische noch durch ionisierende Strahlung wie etwa UV-, Röntgen- noch Elektronenstrahlen inittiert. Die Temperatur, bei der die chemischen Vernetzungsreaktionen einsetzen oder initiiert werden, kann bei Raumtemperatur oder sogar darunter liegen. Die Vernetzungsreaktion startet nach dem Verdunsten des Lösemittels. Um zu verhindern, dass die Mischung, insbesondere der Polyacrylat-Haftklebstoff bereits in der Lösung vernetzt, wird der Lösung vorteilhaft ein Alkohol, insbesondere Isopropanol zugesetzt. Alternativ können auch geringe Mengen Acetylaceton oder andere leicht abspaltbare Komplexbildner zugegben werden, oder die Lösung kann sehr stark verdünnt werden. Bevorzugte Konzentrationen der Mischung in dem einen oder den mehreren Lösemitteln liegen zwischen 0,1 und maximal 30 Masseprozent, besonders bevorzugt zwischen 0,5 und 20 Masseprozent, ganz besonders bevorzugt zwischen 1,0 und 10 Masseprozent.

Ein Metallacetylacetonat im Sinne dieser Erfindung ist ein Metall-Chelat mit dem Enolat-Anion von Acetylaceton als Ligand. Der IUPAC-Name für Acetylaceton ist Pentan-2,4-dion. Ein Metallalkoxid im Sinne dieser Erfindung ist ein Metallalkoholat, also eine Verbindung aus einem Metallkation und einem Alkoholatanion. Beispiele für industriell häufig verwendete Alkoholate sind Methanolat, Ethanolat, Isopropanolat, tert.-Butanolat. Unter einem Alkoxy-Metallacetylacetonat wird eine Komplexverbindung verstanden aus einem Metallkation und mindestens zwei unterschiedlichen Liganden, wobei einer der Liganden ein Alkoholatanion ist und ein anderer Ligand das Enolat-Anion von Acetylaceton. Synonyme für ein Alkoxy-Metallacetylacetonat sind Metallalkoxidacetylacetonat oder Metallacetylacetonatalkoxid. Alle genannten Metallverbindungen dürfen noch zusätzliche weitere Liganden tragen, ohne den Erfindungsgedanken zu verlassen. Bevorzugte Metalle sind Titan, Aluminium, Zirkonium, Zink sowie Eisen. Eine besonders bevorzugte Verbindung ist Titandiisopropoxid-bis(acetylacetonat.

Unter einem chlorierten Polyolefin wird in dieser Erfindung ein Polyolefin verstanden, das chloriert wurde. Das Polyolefin kann beispielsweise Polypropylen oder Polyethylen oder ein Copolymerisat oder ein Blend aus Polypropylen und Polyethylen sein. Das Chlorieren kann in Lösemitteln, Dispersionen oder durch direktes Einwirken von gasförmigen Chlor erfolgt sein. Das chlorierte Polyolefin kann in der Weise modifiziert sein, dass es optional mit einer $\alpha$, $\beta$-ungesättigten Carbonsäure oder deren Anhydrid, insbesondere mit Maleinsäureanhydrid, und / oder mit Acrylat-Monomeren in einer Pfropfungsreaktion funktionalisiert wurde, wobei die Pfropfungsreaktion vor oder nach der Chlorierung erfolgt sein kann. Chlorierte Polyolefine sind sowohl in ihren unmodifizierten als auch in den beschriebenen modifizierten Formen Stand der Technik und in allen genannten Formen als Haftvermittler bekannt.

In einer vorteilhaften Ausführungsform des erfindungsgemäßen Primers enthält der Primer zusätzlich ein oder mehrere bekannte Epoxidharze. Mit Epoxidharzen sind hier alle unvernetzten, bei Raumtemperatur festen oder flüssigen, in geeigneten Lösungsmitteln löslichen, zwei oder mehr Epoxidgruppen tragenden Oligomere gemeint. In Frage kommen zum Beispiel alle bekannten Epoxidharze auf Basis von Bisphenol A und/oder Bisphenol F, Epoxy-Phenolnovolake, Epoxy-Cresolnovolake, Dicyclopentadien-Phenolnovolake, cycloaliphatische Epoxidharze, sowie Ester- oder Aminogruppen enthaltenden Epoxidharze. Die Konzentration der Summe der Epoxidharze in der Mischung beträgt maximal 12 Masseprozent, bevorzugt maximal 6 Masseprozent, besonders bevorzugt maximal 3 Masseprozent.

In einer weiteren vorteilhaften Ausführungsform des erfindungsgemäßen Primers enthält der Primer zusätzlich ein oder mehrere bekannte Styrolacrylatharze.

Unter Styrolacrylatharzen sind alle unvernetzten, bei Raumtemperatur festen oder flüssigen, in geeigneten Lösungsmitteln löslichen Harze zu verstehen, die zumindest aus Styrol- und Acrylsäure-, Methacrylsäure-, Acrylsäureestern und / oder Methacrylsäureestern aufgebaut sind. Bevorzugte Styrolacrylatharze sind hydroxylgruppenhaltig.

In einer weiteren vorteilhaften Ausführungsform des erfindungsgemäßen Primers enthält der Primer zusätzlich ein oder mehrere bekannte organofunktionelle Silane. Unter einem organofunktionellem Silan werden in dieser Schrift Verbindungen der allgemeinen Formel $(R^1O)_3Si\text{-}R^2X$ oder $(R'O)_2(R^3)Si\text{-}R^2X$ verstanden. Typische Beispiele für den Substituenten $(R^1O)$ sind Methoxy-, Ethoxy-, 2-Methoxyethoxy- oder Acetoxy-Gruppen. Der Substituent $R^3$ ist typischerweise eine Methylgruppe. Typische in Frage kommende Substituenten $R^2X$ sind die Gruppen 3-Glycidoxypropyl-, vinyl-, methacryloxymethyl-, 3-methacryloxypropyl-, methyl, isooctyl, hexadecyl-, cyclohexyl- oder phenyl-, um nur einige Beispiele zu nennen.

In einer weiteren vorteilhaften Ausführungsform des erfindungsgemäßen Primers enthält der Primer zusätzlich ein oder mehrere bekannte fluoreszierende optische Aufheller. Die Funktion des fluoreszierenden optischen Aufhellers ist die Kenntlichmachung eines geprimerten Untergrundes. Ohne optische Kenntlichmachung ist es häufig schwer, einen geprimerten Untergrund von einem nicht geprimerten Untergrund zu unterscheiden, da die Auftragsstärke eines Primers in der Regel sehr dünn und somit optisch kaum sichtbar ist. Ein bekannter fluoreszierender optischer Aufheller ist 2,5-Thiophendiylbis(5-tert-butyl-1,3-benzoxazol), CAS-Nr. 7128-64-5, kommerziell erhältlich unter dem Handelsnamen Tinopal OB®.

Produkteigenschaften

Primer gemäß obiger Zusammensetzung haben eine exzellente Haftung auf insbesondere PP/EPDM, aber auch vielen anderen Kunststoffen wie zum Beispiel ABS, PC, PVC oder PP sowie gleichermaßen auch auf verzinktem Stahl. Klebebänder mit polaren Haftklebstoffen, insbesondere Haftklebstoffen auf Basis von thermisch vernetzten Copolymerisaten aus Acrylsäureestern und Acrylsäure haften ausgezeichnet auf dem Primer. Die Adhäsionskraft der Klebebänder zu dem Primer baut sich dabei überraschenderweise nur relativ langsam auf, so dass die Klebebänder noch bis zu einem Zeitraum von ungefähr drei Minuten nach ihrer Applikation adhäsiv abgelöst werden können. Die adhäsive Ablösbarkeit während dieses Zeitraums bei gleichzeitiger exzellenter Haftung nach einer Verklebungszeit von mehr als drei Tagen ist gegenüber dem Stand der Technik neu. Die exzellente Haftung nach einer Verklebungszeit von mehr als drei Tagen zeigt sich darin, dass das Klebeband dann überwiegend nur noch unter Zerstörung, das heißt unter innerer Klebebandspaltung ablösbar ist. Nach mehrwöchigen Feuchtwärmelagerungen oder Klimawechsellagerungen unter Einbeziehung von Temperaturen von 60 ° bis 90 °C bei gleichzeitiger relativer Luftfeuchtigkeit von größer oder gleich 80 % des auf den mit dem Primer beschichteten Untergrund aufgeklebten Klebebandes lässt sich das Klebeband überwiegend nur unter eigener Zerstörung ablösen. Es kommt zu keiner oder zumindest geringerern Feuchteunterwanderung als es mit den heute bekannten Primern ohne Primer der Fall ist.

Anhand der folgenden Beispiele soll die Erfindung näher beschrieben werden, ohne die Erfindung damit einschränken zu wollen.

Die folgenden Prüfmethoden wurden eingesetzt, um die erfindungsgemäß hergestellten Muster kurz zu charakterisieren:

Dynamisch Mechanische Analyse (DMA) zur Bestimmung des Speichermoduls G' und des Verlustmoduls G"

Zur Charakterisierung der Haftklebstoffe erfolgten Bestimmungen des Speichermoduls G' und des Verlustmoduls G" mittels Dynamisch Mechanischer Analyse (DMA).
Die Messungen erfolgten mit dem schubspannungsgesteuerten Rheometer DSR 200 N der Firma Rheometric Scientific im Oszillationsversuch bei einer sinusförmig oszillierenden Scherbeanspruchung in einer Platte-Platte-Anordnung. Der Speichermodul G' und der Verlustmodul G" wurden im Frequenzsweep von $10^{-1}$ bis $10^2$ rad/sec bei einer Temperatur von 23 °C bestimmt. G' und G" sind folgendermaßen definiert:

G' = $\tau/\gamma$ •cos($\delta$) ($\tau$ = Schubspannung, $\gamma$ = Deformation, $\delta$ = Phasenwinkel = Phasenverschiebung zwischen Schubspannungs- und Deformationsvektor).
G" = $\tau/\gamma$ •sin($\delta$) ($\tau$ = Schubspannung, $\gamma$ = Deformation, $\delta$ = Phasenwinkel = Phasenverschiebung zwischen Schubspannungs- und Deformationsvektor).

Die Definition der Winkelfrequenz lautet: $\omega = 2\pi \cdot f$ (f = Frequenz). Die Einheit ist rad/sec.
Die Dicke der gemessenen Haftklebstoff-Proben betrug stets zwischen 0,9 und 1,1 mm (1 +/- 0,1 mm). Die Haftklebstoff-Proben wurden hergestellt, indem die weiter unten beschriebenen Haftklebstoffe auf einer beidseitig silikonisierten Polyesterfolie (Trennliner) ausgestrichen wurden, das Lösungsmittel bei 70° abgedampft wurde und die so erhaltenen 100 $\mu$m dicken Ausstriche so oft aufeinandergelegt wurden, bis eine Dicke von ca. 1 mm erreicht war. Der Probendurchmesser betrug jeweils 25 mm. Die Vorspannung erfolgte mit einer Belastung von 3N. Der Stress der Probenkörper betrug bei allen Messungen 2500 Pa.

Klebkraft

Die Klebkraft wurde in Anlehnung an PSTC-101 bei Raumtemperatur bestimmt. Nach dieser Methode wurde zunächst der Primer auf das Substrat (den Untergrund) dünn aufgetragen. Dies erfolgte mit einem Pinselaufstrich des Primers auf das Substrat. Nach dem Abdunsten des Lösemittels wurde der zu messende Klebstreifen (das Klebeband) auf den nunmehr mit dem Primer in einer Schichtdicke von ungefähr 3 $\mu$m bis 5 $\mu$m versehenen Untergrund aufgebracht (aufgeklebt). Dazu wurde ein Streifen des Klebebandes in definierter Breite (Standard: 20 mm) auf den mit dem Primer beschichteten Untergrund mit den Abmessungen 50 mm x 125 mm x 1,1 mm durch zehnmaliges Überrollen mittels einer 5 kg Stahlrolle geklebt.
Die Zeit zwischen dem letzten Überrollen des Klebebandes und dem Abziehen betrug: a) 30 Minuten, b) 3 Tage. Der Abzugswinkel betrug jeweils 90°, die Abzugsgeschwindigkeit 300 mm/min. Die zum Abziehen erforderliche Kraft ist die Klebkraft, welche in der Einheit N/cm angegeben wird und sich somit auf eine normierte Klebebandbreite von 1 cm bezieht. Ermittelt wurde neben der Klebkraft die Art des Versagens der Klebverbindung. Die gemessenen Klebstreifen waren mit einer 23 $\mu$m dicken, mit Trichloressigsäure angeätzten Polyesterfolie rückseitenverstärkt. Alle Messungen wurden in einem klimatisierten Raum bei 23 °C und 50 % relativer Luftfeuchte durchgeführt.

Wiederablösbarkeit

Die Wiederablösbarkeit wurde ebenfalls in Anlehnung an PSTC-101 bei Raumtemperatur bestimmt. Nach dieser Methode wurde zunächst der Primer auf das Substrat (den Untergrund) dünn aufgetragen. Dies erfolgte mit einem Pinselaufstrich des Primers auf das Substrat. Nach dem Abdunsten des Lösemittels wurde der zu messende Klebstreifen (das Klebeband) auf den nunmehr mit dem Primer in einer Schichtdicke von ungefähr 3 $\mu$m bis 5 $\mu$m versehenen Untergrund aufgebracht (aufgeklebt). Dazu wurde ein Streifen des Klebebandes in definierter Breite (Standard: 20 mm) auf den mit dem Primer beschichteten Untergrund mit den Abmessungen 50 mm x 125 mm x 1,1 mm durch einmaliges Überrollen mittels einer 5 kg Stahlrolle geklebt.

Die Zeit zwischen dem Überrollen des Klebebandes und dem Abziehen betrug jeweils eine Minute. Der Abzugswinkel betrug jeweils 90°, die Abzugsgeschwindigkeit 30 mm/min. Ermittelt wurde die Art des Versagens der Klebverbindung.

### Schertest

Der Schertest erfolgte in Anlehnung an die Prüfvorschrift PSTC-107. Nach dieser Methode wurde zunächst der Primer auf das Substrat dünn aufgetragen. Dies erfolgte mit einem Pinselaufstrich des Primers auf das Substrat. Nach dem Abdunsten des Lösemittels wurde der zu messende Klebstreifen (das Klebeband) auf den nunmehr mit dem Primer in einer Schichtdicke von ungefähr 3$\mu$m bis 5 $\mu$m versehenen Untergrund (das Substrat) aufgebracht, zweimal mit einem 2kg-Gewicht aufgedrückt und anschließend nach einer definierten Zeit einer konstanten Scherbelastung ausgesetzt. Die Zeit zwischen dem zweiten Aufdrücken des Klebebandes und dem Abziehen betrug: a) 30 Sekunden, b) 30 Minuten. Ermittelt wurde die Art des Versagens des Klebebandes sowie Haltedauer in Minuten.

Die Verklebungsfläche betrug jeweils 13 x 20 mm. Die Scherbelastung dieser Verklebungsfläche betrug 1 kg. Die Messung erfolgte bei Raumtemperatur (23°C). Die gemessenen Klebstreifen waren mit einer 23 $\mu$m dicken, mit Trichloressigsäure angeätzten Polyesterfolie rückseitenverstärkt.

### Klimalagerungen

Die Verbunde aus dem mit dem erfindungsgemäßen Primer beschichteten Substrat und dem darauf aufgeklebten Klebeband wurden Lagerungen bei ausgewählten klimatischen Bedingungen unterworfen, um die klimatische Belastbarkeit der Verklebung zu ermitteln. Lagerung a): zweiwöchige Lagerung in einem Klima von 85 °C und 85% relative Luftfeuchtigkeit

Lagerung b): zweiwöchige Klimawechsellagerung mit den Zyklen 4 Stunden -40 °C, 4 Stunden Aufheizen / Abkühlen, 4 Stunden 80°C/80% relative Luftfeuchtigkeit.

Nach Ablauf der Lagerzeit wurden die mit einer 23 $\mu$m dicken, mit Trichloressigsäure angeätzten Polyesterfolie rückseitenverstärkten Proben der Klebkraftprüfung bei einem Abzugswinkel von jeweils 90° und einer Abzugsgeschwindigkeit von 300 mm/min in einem klimatisierten Raum bei 23 °C und 50 % relativer Luftfeuchte unterzogen.

### Statische Glasübergangstemperatur

Die Bestimmung der statischen Glasübergangstemperatur erfolgt über Dynamische Differenzkalorimetrie nach DIN 53765. Die Angaben zur Glasübergangstemperatur $T_g$ beziehen sich auf den Glasumwandlungstemperatur-Wert $T_g$ nach DIN 53765:1994-03, sofern im Einzelfall nichts anderes angegeben ist. Aufheizkurven laufen mit einer Heizrate von 10 K/min. Die Muster werden in Al-Tiegeln mit gelochtem Deckel und Stickstoffatmosphäre vermessen. Es wird die zweite Aufheizkurve ausgewertet. Eine Glasübergangstemperatur ist als Wendepunkt im Thermogramm erkennbar.

### Molekulargewichte

Die Bestimmung des mittleren Molekulargewichtes $M_W$ beziehungsweise des mittleren Molekulargewichtes $M_N$ und der Polydispersität D erfolgte mittels Gelpermeationschromatographie (GPC). Als Eluent wurde THF mit 0,1 Vol.-% Trifluoressigsäure eingesetzt. Die Messung erfolgte bei 25 °C. Als Vorsäule wurde PSS-SDV, 5 $\mu$m, $10^3$ Å ($10^{-7}$ m), ID 8,0 mm x 50 mm verwendet. Zur Auftrennung wurden die Säulen PSS-SDV, 5 $\mu$m, $10^3$ Å ($10^{-7}$ m), $10^5$ Å ($10^{-5}$ m) und $10^6$ Å ($10^{-4}$ m) mit jeweils ID 8,0 mm x 300 mm eingesetzt. Die Probenkonzentration betrug 4 g/l, die Durchflussmenge 1,0 ml pro Minute. Es wurde gegen PMMA-Standards gemessen.

### Feststoffgehalt

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

### K-Wert (nach FIKENTSCHER)

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskositmeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.)

Folgende Substrate (Untergründe, auf die zunächst der Primer aufgetragen und darauf anschließend das Klebeband aufgeklebt wurde) wurden verwendet:

a) PP/EPDM, (Bezeichnung: HX TRC 135X/4 Black), (Firma Basell Bayreuth Chemie GmbH); PP/EPDM = Blend aus Polypropylen und EPDM; EPDM = Ethylen-Propylen-Dien-Kautschuk
b) Feuerverzinkter Stahl (aus DX51 D+2275), (Firma Rocholl GmbH)
c) ABS (Acrylnitril-Butadien-Styrol-Copolymerisat), (Firma Rocholl GmbH)
d) PC (Polycarbonat), (Firma Rocholl GmbH)
e) PVC (Polyvinylchlorid) (Firma Rocholl GmbH)
f) PP (Polypropylen), (Firma Rocholl GmbH)

Die Klebebänder (Testklebebänder), mit denen der Primer geprüft wurde, basierten auf Polyacrylat-Haftklebstoffen. Zur Herstellung dieser Polyacrylat-Haftklebstoffe wurden die folgenden Rohstoffe verwendet:

| Chemische Verbindung | Handelsname | Hersteller oder Lieferant | CAS-Nr. |
|---|---|---|---|
| Bis-(4-tert-butylcyclohexyl)peroxydicarbonat | Perkadox 16 | Akzo Nobel | 15520-11-3 |
| 2,2'-Azobis(2-methylpropionitril), AIBN | Vazo 64 | DuPont | 78-67-1 |
| 2,2'-Azobis(2-methylbutyronitrile) | Vazo 67 | DuPont | 13472-08-7 |
| Pentaerythrittetraglycidether | Polypox R16 | UPPC AG | 3126-63-4 |
| 3,4-Epoxycyclohexylmethyl-3,4-epoxycyclohexancarboxylat | Uvacure 1500 | Cytec Industries Inc. | 2386-87-0 |
| Triethylentetramin | Epikure 925 | Hexion Speciality Chemicals | 112-24-3 |
| Mikroballons (MB) (trocken-unexpandierte Mikrosphären, Durchmesser 9 bis 15 $\mu$m, Expansions-Starttemperatur 106 bis 111 °C, TMA-Dichte $\leq$ 25 kg/m$^3$) | Expancel 051 DU 40 | Expancel Nobel Industries | |
| Terpenphenolharz (Erweichungspunkt 110 °C; $M_w$ = 500 bis 800 g/mol; D = 1,50) | Dertophene T110 | DRT resins | 25359-84-6 |
| Acrylsäure-n-Butylester | n-Butylacrylat | Rohm & Haas | 141-32-2 |
| Acrylsäure | Acrylsäure rein | BASF | 79-10-7 |
| 2-Ethylhexylacrylat | | Brenntag | 103-11-7 |
| Methylacrylat | | BASF | 96-33-3 |

Die Expansionsfähigkeit der Mikroballons kann durch die Bestimmung der TMA-Dichte [kg/m$^3$] beschrieben werden (Stare Thermal Analysis System der Firma Mettler Toledo; Heizrate 20 °C/min). Die TMA-Dichte ist hierbei die minimal erreichbare Dichte bei einer bestimmten Temperatur $T_{max}$ unter Normaldruck, bevor die Mikroballons kollabieren.
Die Bestimmung des Erweichungspunktes der Harze erfolgt nach DIN ISO 4625.
Weiterhin wurden die folgenden Lösemittel zur Herstellung der in den Testklebebändern enthaltenen Polyacrylat-Haftklebstoffe verwendet:

| Bezeichnung | CAS-Nr. | Hersteller |
|---|---|---|
| Spezialbenzin 60/95 oder Naphtha (Erdöl) mit Wasserstoff behandelte leichte | 64742-49-0 | Shell, Exxon |
| Aceton | 67-64-1 | Shell |
| Isopropanol | 67-63-0 | Shell |

Testklebeband 1

Ein beispielhafter Polyacrylat-Haftklebstoff 1 zur Herstellung des Testklebebandes 1 wurde wie folgt hergestellt: Ein für radikalische Polymerisationen konventioneller Reaktor wurde mit 54,4 kg 2-Ethylhexylacrylat, 20,0 kg Methylacrylat, 5,6 kg Acrylsäure und 53,3 kg Aceton/Isopropanol (94:6) befüllt. Nach 45minütiger Durchleitung von Stickstoffgas unter Rühren wurde der Reaktor auf 58 °C hochgeheizt und 40 g Vazo 67, gelöst in 400 g Aceton, hinzugegeben. Anschließend wurde das äußere Heizbad auf 75 °C erwärmt und die Reaktion konstant bei dieser Außentemperatur durchgeführt. Nach 1 h wurden erneut 40 g Vazo 67, gelöst in 400 g Aceton, zugegeben und nach 4 h wurde mit 10 kg Aceton/Isopropanol-Gemisch (94:6) verdünnt.

Nach 5h sowie nach 7 h wurde jeweils mit 120 g Bis-(4-tert-butylcyclohexyl)-peroxydicarbonat, jeweils gelöst in 400 g Aceton, nachinitiiert. Nach 22 h Reaktionszeit wurde die Polymerisation abgebrochen und auf Raumtemperatur abgekühlt. Das Produkt hatte einen Feststoffgehalt von 55,9 % und wurde in einem Aufkonzentrationsextruder bei Unterdruck vom Lösemittel befreit (Restlösemittelgehalt $\leq$ 0,3 Masseprozent). Das resultierende Polyacrylat hatte einen K-Wert von 58,8, ein mittleres Molekulargewicht von Mw = 746.000 g/mol, eine Polydispersität von D (Mw/Mn) = 8,9 und eine statische Glasübergangstemperatur von $T_g$ = - 35,6 °C.

Dieses Basispolymer wurde in einem Fütterextruder (Einschneckenförderextruder der Firma TROESTER GmbH & Co KG, Deutschland) aufgeschmolzen und mit diesem als Polymerschmelze über einen beheizbaren Schlauch in einen Planetwalzenextruder der Firma Entex (Bochum) gefördert. Über eine Dosieröffnung wurde nun das geschmolzene Harz Dertophene T 110 zugegeben, so dass eine Konzentration des Harzes in der Schmelze von 28,3 Masseprozent entstand. Weiterhin wurde der Vernetzer Polypox R16 hinzugefügt. Seine Konzentration in der Schmelze betrug 0,14 Masseprozent. Alle Komponenten wurden zu einer homogenen Polymerschmelze gemischt.

Mittels einer Schmelzepumpe und eines beheizbaren Schlauches wurde die Polymerschmelze in einen Doppelschneckenextruder (Firma Berstorff) überführt. Dort wurde der Beschleuniger Epikure 925 hinzugefügt. Seine Konzentration in der Schmelze betrug 0,14 Masseprozent. Anschließend wurde die gesamte Polymermischung in einem Vakuumdom bei einem Druck von 175 mbar von allen Gaseinschlüssen befreit. Im Anschluss an die Vakuumzone wurden die Mikroballons zudosiert und mittels eines Mischelements homogen in die Polymermischung eingearbeitet. Ihre Konzentration in der Schmelze betrug 0,7 Masseprozent. Die entstandene Schmelzmischung wurde in eine Düse überführt.

Nach Verlassen der Düse, also nach Druckabfall, expandierten die eingearbeiteten Mikroballons, wobei durch den Druckabfall eine scherungsfreie Abkühlung der Polymermasse erfolgte. Es entstand ein geschäumter Polyacrylat-Haftklebstoff, welcher anschließend mittels eines Walzenkalanders bahnförmig in einer Dicke von 0,8 mm ausgeformt und mit einer beidseitig silikonisierte Trennfolie (50 μm Polyester) eingedeckt wurde, währenddessen die chemische Vernetzungsreaktion voran schritt. Der aufgewickelte Film wurde vier Wochen bei Raumtemperatur gelagert, bevor er weiter für die Primerprüfung verwendet wurde. Der aufgewickelte Film ist das Testklebeband 1.

Testklebeband 2

Ein beispielhafter Polyacrylat-Haftklebstoff 2A zur Herstellung der mittleren Schicht des dreischichtigen Testklebebandes 2 wurde wie folgt hergestellt:
Ein für radikalische Polymerisationen konventioneller Reaktor wurde mit 30,0 kg 2-Ethylhexylacrylat, 67,0 kg Butylacrylat, 3,0 kg Acrylsäure und 66,7 kg Aceton/ Isopropanol (96:4) befüllt. Nach 45minütiger Durchleitung von Stickstoffgas unter Rühren wurde der Reaktor auf 58 °C hochgeheizt und 50 g Vazo 67, gelöst in 500 g Aceton, hinzugegeben. Anschließend wurde das äußere Heizbad auf 70 °C erwärmt und die Reaktion konstant bei dieser Außentemperatur durchgeführt. Nach 1 h wurden erneut 50 g Vazo 67, gelöst in 500 g Aceton, zugegeben und nach 2 h mit 10 kg Aceton/Isopropanol-Gemisch (96:4) verdünnt. Nach 5,5 h wurden 150 g Bis-(4-*tert*-butylcyclohexyl)peroxydicarbonat, gelöst in 500 g Aceton, zugegeben; nach 6 h 30 min wurde erneut mit 10 kg Aceton/Isopropanol-Gemisch (96:4) verdünnt. Nach 7 h wurden weitere 150 g Bis-(4-*tert*-butylcyclohexyl)peroxydicarbonat, gelöst in 500 g Aceton, zugegeben und das Heizbad auf eine Temperatur von 60 °C eingeregelt.

Nach 22 h Reaktionszeit wurde die Polymerisation abgebrochen und auf Raumtemperatur abgekühlt. Das Produkt hatte einen Feststoffgehalt von 50,2 % und wurde getrocknet. Das resultierende Polyacrylat hatte einen K-Wert von 75,2, ein mittleres Molekulargewicht von Mw = 1 370 000 g/mol, eine Polydispersität von D (Mw/Mn) = 17,13 und eine statische Glasübergangstemperatur von Tg = - 38.0 °C. Dieses Basispolymer wurde in einem Fütterextruder (Einschneckenförderextruder der Firma TROESTER GmbH & Co KG, Deutschland) aufgeschmolzen und mit diesem als Polymerschmelze über einen beheizbaren Schlauch in einen Planetwalzenextruder der Firma Entex (Bochum) gefördert. Über eine Dosieröffnung wurde nun der Vernetzer Polypox R16 hinzugefügt. Seine Konzentration in der Schmelze betrug 0,22 Masseprozent. Alle Komponenten wurden zu einer homogenen Polymerschmelze gemischt.

Mittels einer Schmelzepumpe und eines beheizbaren Schlauches wurde die Polymerschmelze in einen Doppelschneckenextruder (Firma Berstorff) überführt. Dort wurde der Beschleuniger Epikure 925 hinzugefügt. Seine Konzentration in der Schmelze betrug 0,14 Masseprozent. Anschließend wurde die gesamte Polymermischung in einem Vakuumdom bei einem Druck von 175 mbar von allen Gaseinschlüssen befreit. Im Anschluss an die Vakuumzone wurden die Mikroballons zudosiert und mittels eines Mischelements homogen in die Polymermischung eingearbeitet. Ihre Konzentration in der Schmelze betrug 2,0 Masseprozent. Die entstandene Schmelzmischung wurde in eine Düse überführt.

Nach Verlassen der Düse, also nach Druckabfall, expandierten die eingearbeiteten Mikroballons, wobei durch den Druckabfall eine scherungsfreie Abkühlung der Polymermasse erfolgte. Es entstand der geschäumte Polyacrylat-Haftklebstoff 2A, welcher anschließend mittels eines Walzenkalanders bahnförmig in einer Dicke von 0,8 mm ausgeformt und mit einer beidseitig silikonisierte Trennfolie (50 μm Polyester) eingedeckt wurde, währenddessen die chemische Vernetzungsreaktion voran schritt. Der aufgewickelte Film wurde vor der Weiterverarbeitung (siehe unten) einen Tag bei Raumtemperatur gelagert.

Ein beispielhafter Polyacrylat-Haftklebstoff 2B zur Herstellung der beiden äußeren Schichten des dreischichtigen Testklebebandes 2 wurde wie folgt hergestellt:

Ein für radikalische Polymerisationen konventioneller 100 L-Glasreaktor wurde mit 4,8 kg Acrylsäure, 11,6 kg Butylacrylat, 23,6 kg 2-Ethylhexylacrylat und 26,7 kg Aceton/ Spezialbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Anschließend wurde das Polyacrylat mit 0,2 Masseprozent des Vernetzers Uvacure® 1500 abgemischt, auf einen Feststoffgehalt von 30 % mit Aceton verdünnt und dann aus Lösung auf eine beidseitig silikonisierte Trennfolie (50 μm Polyester) beschichtet. (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C). Die Dicke betrug 50 μm. Der aufgewickelte Film wurde zwei Tage bei Raumtemperatur gelagert, bevor er weiter für die Herstellung des Testklebebandes 2 verwendet wurde.

Auf den geschäumten Film des Polyacrylat-Haftklebstoffs 2A wurde beidseitig ein Film des Polyacrylat-Haftklebstoffs 2B kaschiert. Unmittelbar vor dem Zukaschieren des Films des Polyacrylat-Haftklebstoffs 2B zu dem geschäumten Film des Polyacrylat-Haftklebstoffs 2A wurde die jeweils zu kaschierende Oberfläche des Films des Polyacrylat-Haftklebstoffs 2A bei einer Corona-Dosis von 35 Wmin/m$^2$ luftcoronavorbehandelt. Vor der zweiten Kaschierung wurde die beidseitig silikonisierte Trennfolie des geschäumten Polyacrylat-Haftklebstoffs 2A ausgedeckt. Nach der zweiten Kaschierung wurde auch eine der beidseitig silikonisierten Trennfolien der beiden geschäumten Polyacrylat-Haftklebstoffe 2B ausgedeckt. Der dreischichtige Verbund aus Polyacrylat-Haftklebstoff 2B / Polyacrylat-Haftklebstoff 2A / Polyacrylat-Haftklebstoff 2B wurde aufgewickelt und vier Wochen bei Raumtemperatur gelagert, bevor er weiter für die Primerprüfung verwendet wurde. Der aufgewickelte Verbund ist das Testklebeband 2.

Die beispielhaft in ihrer Zusammensetzung und Herstellmethodik beschriebenen Polyacrylat-Haftklebstoffe sind in DE 10 2010 062 669 ausführlich beschrieben. Der Offenbarungsgehalt dieser Schrift sei explizit in den Offenbarungsgehalt dieser Erfindung eingebunden.

Zur Herstellung des erfindungsgemäß im Primer enthaltenenen PolyacrylatHaftklebstoffs wurden die folgenden Rohstoffe verwendet:

| Chemische Verbindung | Handelsname | Hersteller | CAS-Nr. |
|---|---|---|---|
| Bis-(4-tert-butylcyclohexyl)peroxydicarbonat | Perkadox 16 | Akzo Nobel | 15520-11-3 |
| 2,2'-Azobis(2-methylpropionitril), AIBN | Vazo 64 | DuPont | 78-67-1 |
| Acrylsäure-n-Butylester | n-Butylacrylat | Rohm & Haas | 141-32-2 |
| Acrylsäure | Acrylsäure rein | BASF | 79-10-7 |
| 2-Ethylhexylacrylat | | Brenntag | 103-11-7 |
| Isobornylacrylat | Ageflex IBOA | Ciba | 5888-33-5 |

Weiterhin wurden die folgenden Lösemittel zur Herstellung der in den Testklebebändern enthaltenen Polyacrylat-Haftklebstoffe verwendet:

| Bezeichnung | CAS-Nr. | Hersteller |
|---|---|---|
| Spezialbenzin 60/95 oder Naphtha (Erdöl) mit Wasserstoff behandelte leichte | 64742-49-0 | Shell, Exxon |
| Aceton | 67-64-1 | Shell |

Beispielhafte Polyacrylat-Haftklebstoffe zur Verwendung als Bestandteil im erfindungsgemäßen Primer wurden wie folgt hergestellt:

Primer-Haftklebstoff 1

Ein für radikalische Polymerisationen konventioneller 100 L-Glasreaktor wurde mit 4,8 kg Acrylsäure, 11,6 kg Butylacrylat, 23,6 kg 2-Ethylhexylacrylat und 26,7 kg Aceton/ Spezialbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Das Polyacrylat wurde auf einen Feststoffgehalt von 30 Masseprozent mit Aceton verdünnt.

Primer-Haftklebstoff 2

Ein für radikalische Polymerisationen konventioneller 100 L-Glasreaktor wurde mit 3,2 kg Acrylsäure, 13,6 kg Butylacrylat, 23,2 kg 2-Ethylhexylacrylat und 26,7 kg Aceton/ Spezialbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Das Polyacrylat wurde auf einen Feststoffgehalt von 30 Masseprozent mit Aceton verdünnt.

Primer-Haftklebstoff 3

Ein für radikalische Polymerisationen konventioneller 100 L-Glasreaktor wurde mit 6,0 kg Acrylsäure, 9,2 kg Butylacrylat, 24,8 kg 2-Ethylhexylacrylat und 26,7 kg Aceton/ Spezialbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Das Polyacrylat wurde auf einen Feststoffgehalt von 30 Masseprozent mit Aceton verdünnt.

Primer-Haftklebstoff 4

Ein für radikalische Polymerisationen konventioneller 100 L-Glasreaktor wurde mit 4,8 kg Acrylsäure, 10,0 kg Butylacrylat, 22,0 kg 2-Ethylhexylacrylat, 3,2 kg Isobornylacrylat und 26,7 kg Aceton/ Spezialbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Das Polyacrylat wurde auf einen Feststoffgehalt von 30 Masseprozent mit Aceton verdünnt.

Primer-Haftklebstoff 5 für ein Vergleichsbeispiel

Ein für radikalische Polymerisationen konventioneller 100 L-Glasreaktor wurde mit 0,8 kg Acrylsäure, 14,8 kg Butylacrylat, 24,4 kg 2-Ethylhexylacrylat und 26,7 kg Aceton/ Spezialbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Das Polyacrylat wurde auf einen Feststoffgehalt von 30 Masseprozent mit Aceton verdünnt.

Die Primer-Haftklbstoffe 1 bis 5 wurden kurz per DMA-Messungen charakterisiert. Die G'- und G"-Kurven der Primer-Haftklebstoffe 1 bis 5 lagen im Deformationsfrequenzbereich von $10°$ bis $10^1$ rad/sec bei 23 °C stets vollständig im Bereich von $10^3$ bis $10^7$ Pa.

Zur Herstellung der erfindungsgemäßen Primer wurden die hinsichtlich ihrer Herstellung und Zusammensetzung oben beschriebenen Primer-Haftklebstoffe sowie die folgenden Rohstoffe verwendet:

| Chemische Verbindung / Beschreibung (Herstellerangaben) | Handelsname | Hersteller oder Lieferant | CAS-Nr. |
|---|---|---|---|
| Chloriertes Polyolefin, ChlorGehalt: 20%, $M_W$=50.000, Maleinsäureanhydrid-modifiziert, Maleinsäureanhydrid-Gehalt: 2,0% | Hardlen F 6P | Toyobo | 560096-07-3 (95%), 3101-60-8 (5%) (Herstellerangaben) |
| Chloriertes Polyolefin, ChlorGehalt: 30%, $M_W$=170.000 | Hardlen 15-LP | Toyobo | |
| Chloriertes Polyolefin, Acrylatmodifiziert, 45% Feststoffgehalt in Xylol/Toluol | Hardlen 163-LR | Toyobo | |
| Hydroxylgruppenhaltiges Polyacrylat, ca. 65% in Butylacetat/Xylol 26:9 | Desmophen A 365 BA/X 65% | Bayer | |
| Titan bis(2,4-pentadionato-)bis(2-propanolat), 75% in Isopropanol | Tyzor AA | DuPont | 17927-72-9, 67-63-0 |
| Tetra.n-butyltitanat | Tyzor TBT | DuPont | 5593-70-4 |
| Aluminiumacetylacetonat | | Merck | 13963-57-0 |
| Epoxidharz auf Basis Bisphenol A, Mittleres Molekulargewicht < 700 | Epikote 828 | Hexion | 25068-38-6 |
| Glycidoxypropyltrimethoxysilan | Xiameter OFS-6040 Silane | Dow Corning | 2530-83-8 |
| 2,5-Thiophendiylbis(5-tert-butyl-1,3-benzoxazol | Tinopal OB | BASF | 7128-64-5 |

Weiterhin wurden zusätzlich zu den in den Primer-Haftklebstoffen und Primer-Rohstoffen enthaltenen Lösemitteln die folgenden Lösemittel zur Herstellung der erfindungsgemäßen Primer verwendet:

| Bezeichnung | CAS-Nr. | Hersteller oder Lieferant |
|---|---|---|
| Cyclohexan | 110-82-7 | Brenntag |
| Xylol | 106-42-3 | Biesterfeld |
| Ethylbenzol | 100-41-4 | Alfa Aesar |
| Ethylacetat | 141-78-6 | Biesterfeld |
| Isopropanol | 67-63-0 | Shell |

**Beispiele**

Beispiel 1

Zusammensetzung des Primers:

| Rohstoff / Komponente | Masseprozent |
|---|---|
| Primer-Haftklebstoff 1 (30 Gewichtsprozent Feststoffanteil) | 14,25 |
| Tyzor AA | 0,04 |
| Hardlen F 6P | 1,50 |
| Cyclohexan | 45,07 |
| Xylol | 21,96 |
| Ethylbenzol | 4,90 |
| Isopropanol | 10,40 |
| Ethylacetat | 1,88 |

Der Primer wurde in den folgenden Kombinationen geprüft, wobei die folgenden Ergebnisse erhalten wurden:

| Testklebeband | Substrat | Klebkraft (300mm/min) (N/cm) | | Wiederablösbarkeit (30 mm/min) | | Klebkraft nach Klimalagerung (N/cm) | |
|---|---|---|---|---|---|---|---|
| | | nach 30 min | nach 3 d | nach 1 min | nach 3 min | a) 2 Wo 85°C/ 85% rel. Feuchte | b) 2 Wo Klimawechsel |
| 1 | PP/EPDM | 22 (40%K) | 62 (K) | adhäsiv ablösbar | adhäsiv ablösbar | 58 (70%K) | 59 (60%K) |
| 2 | Feuerverzinkter Stahl | 39 (50%K) | 68 (K) | adhäsiv ablösbar | adhäsiv ablösbar | 62 (50%K) | 58 (60%K) |
| 2 | ABS | 25 (40%K) | 73 (K) | adhäsiv ablösbar | adhäsiv ablösbar | 60 (70%K) | 63 (70%K) |
| 2 | PC | 38 (50%K) | 71 (K) | adhäsiv ablösbar | adhäsiv ablösbar | 66 (70%K) | 60 (80%K) |
| 2 | PVC | 31 (50%K) | 69 (K) | adhäsiv ablösbar | adhäsiv ablösbar | 65 (70%K) | 61 (60%K) |
| 1 | PP | 8 (A) | 25 (A) | adhäsiv ablösbar | adhäsiv ablösbar | 20 (20%K) | 18 (20%K) |
| K = Kohäsive Spaltung des Klebebandes (Prozentangabe bezieht sich auf den kohäsiven Anteil) A = Adhäsives Ablösen des Klebebandes vom Primer oder des Primers vom Substrat | | | | | | | |

Beispiel 2

Zusammensetzung des Primers:

| Rohstoff / Komponente | Masseprozent |
|---|---|
| Primer-Haftklebstoff 1 (30 Gewichtsprozent Feststoffanteil) | 14,25 |

(fortgesetzt)

| Rohstoff / Komponente | Masseprozent |
|---|---|
| Tyzor AA | 0,04 |
| Hardlen 15-LP | 1,50 |
| Cyclohexan | 45,07 |
| Xylol | 21,96 |
| Ethylbenzol | 4,90 |
| Isopropanol | 10,40 |
| Ethylacetat | 1,88 |

Der Primer wurde in den folgenden Kombinationen geprüft, wobei die folgenden Ergebnisse erhalten wurden:

| Testklebeband | Substrat | Klebkraft (300mm/min) (N/cm) | | Wiederablösbarkeit (30 mm/min) | | Klebkraft nach Klimalagerung (N/cm) | |
|---|---|---|---|---|---|---|---|
| | | nach 30 min | nach 3 d | nach 1 min | nach 3 min | a) 2 Wo 85°C/ 85% rel. Feuchte | b) 2 Wo Klimawechsel |
| 1 | PP/EPDM | 25 (40%K) | 64 (K) | adhäsiv ablösbar | adhäsiv ablösbar | 28 (10%K) | 19 (20%K) |
| 2 | Feuerverzinkter Stahl | 32 (40%K) | 65 (K) | adhäsiv ablösbar | adhäsiv ablösbar | 59 (20%K) | 50 (10%K) |
| 2 | ABS | 22 (40%K) | 69 (K) | adhäsiv ablösbar | adhäsiv ablösbar | 64 (20%K) | 55 (10%K) |
| 2 | PC | 33 (40%K) | 68 (K) | adhäsiv ablösbar | adhäsiv ablösbar | 60 (80%K) | 62 (90%K) |
| 2 | PVC | 30 (50%K) | 62 (K) | adhäsiv ablösbar | adhäsiv ablösbar | 35 (40%K) | 38 (40%K) |
| 1 | PP | 6 (A) | 15 (A) | adhäsiv ablösbar | adhäsiv ablösbar | 10 (A) | 15 (A) |
| K = Kohäsive Spaltung des Klebebandes (Prozentangabe bezieht sich auf den kohäsiven Anteil) A = Adhäsives Ablösen des Klebebandes vom Primer oder des Primers vom Substrat | | | | | | | |

Beispiel 3

Zusammensetzung des Primers:

| Rohstoff / Komponente | Masseprozent |
|---|---|
| Primer-Haftklebstoff 1 (30 Gewichtsprozent Feststoffanteil) | 13,50 |
| Tyzor AA | 0,03 |
| Hardlen 163-LR | 1,50 |
| Desmophen A 365 BA/X 65% | 2,5 |
| Xiameter OFS-6040 Silane | 0,50 |
| Cyclohexan | 43,07 |

(fortgesetzt)

| Rohstoff / Komponente | Masseprozent |
|---|---|
| Xylol | 21,72 |
| Ethylbenzol | 4,90 |
| Isopropanol | 10,40 |
| Ethylacetat | 1,88 |

Der Primer wurde in den folgenden Kombinationen geprüft, wobei die folgenden Ergebnisse erhalten wurden:

| Testklebeband | Substrat | Klebkraft (300mm/min) (N/cm) | | Wiederablösbarkeit (30 mm/min) | | Klebkraft nach Klimalagerung (N/cm) | |
|---|---|---|---|---|---|---|---|
| | | nach 30 min | nach 3 d | nach 1 min | nach 3 min | a) 2 Wo 85°C/ 85% rel. Feuchte | b) 2 Wo Klimawechsel |
| 1 | PP/EPDM | 32 (40%K) | 62 (K) | adhäsiv ablösbar | adhäsiv ablösbar | 55 (90%K) | 52 (90%K) |
| 2 | Feuerverzinkter Stahl | 50 (80%K) | 68 (K) | adhäsiv ablösbar | adhäsiv ablösbar | 60 (80%K) | 63 (90%K) |
| 2 | ABS | 55 (70%K) | 73 (K) | adhäsiv ablösbar | adhäsiv ablösbar | 65 (80%K) | 67 (90%K) |
| 2 | PC | 60 (80%K) | 71 (K) | adhäsiv ablösbar | adhäsiv ablösbar | 65 (90%K) | 70 (90%K) |
| 2 | PVC | 51 (90%K) | 69 (K) | adhäsiv ablösbar | adhäsiv ablösbar | 66 (90%K) | 64 (90%K) |
| 1 | PP | 11 (A) | 45 (10%K) | adhäsiv ablösbar | adhäsiv ablösbar | 32 (A) | 36 (A) |

K = Kohäsive Spaltung des Klebebandes (Prozentangabe bezieht sich auf den kohäsiven Anteil)
A = Adhäsives Ablösen des Klebebandes vom Primer oder des Primers vom Substrat

Beispiel 4

Zusammensetzung des Primers:

| Rohstoff / Komponente | Masseprozent |
|---|---|
| Primer-Haftklebstoff 1 (30 Gewichtsprozent Feststoffanteil) | 13,50 |
| Tyzor TBT | 0,03 |
| Hardlen F 6P | 1,50 |
| Epikote 828 | 0,20 |
| Desmophen A 365 BA/X 65% | 2,50 |
| Xiameter OFS-6040 Silane | 0,50 |
| Cyclohexan | 43,07 |
| Xylol | 21,52 |
| Ethylbenzol | 4,90 |

(fortgesetzt)

| Rohstoff / Komponente | Masseprozent |
|---|---|
| Primer-Haftklebstoff 1 (30 Gewichtsprozent Feststoffanteil) | 13,50 |
| Isopropanol | 10,40 |
| Ethylacetat | 1,88 |

Der Primer wurde in den folgenden Kombinationen geprüft, wobei die folgenden Ergebnisse erhalten wurden:

| Testklebeband | Substrat | Klebkraft (300mm/min) (N/cm) | | Wiederablösbarkeit (30 mm/min) | | Klebkraft nach Klimalagerung (N/cm) | |
|---|---|---|---|---|---|---|---|
| | | nach 30 min | nach 3 d | nach 1 min | nach 3 min | a) 2 Wo 85°C/ 85% rel. Feuchte | b) 2 Wo Klimawechsel |
| 1 | PP/EPDM | 34 (50%K) | 62 (K) | adhäsiv ablösbar | adhäsiv ablösbar | 55 (90%K) | 52 (90%K) |
| 2 | Feuerverzinkter Stahl | 58 (90%K) | 68 (K) | adhäsiv ablösbar | adhäsiv ablösbar | 60 (90%K) | 63 (90%K) |
| 2 | ABS | 64 (K) | 73 (K) | adhäsiv ablösbar | adhäsiv ablösbar | 65 (90%K) | 67 (90%K) |
| 2 | PC | 65 (K) | 71 (K) | adhäsiv ablösbar | adhäsiv ablösbar | 65 (90%K) | 70 (90%K) |
| 2 | PVC | 65 (K) | 69 (K) | adhäsiv ablösbar | adhäsiv ablösbar | 66 (90%K) | 64 (90%K) |
| 1 | PP | 16 (A) | 58 (20%K) | adhäsiv ablösbar | adhäsiv ablösbar | 32 (A) | 36 (A) |
| K = Kohäsive Spaltung des Klebebandes (Prozentangabe bezieht sich auf den kohäsiven Anteil) A = Adhäsives Ablösen des Klebebandes vom Primer oder des Primers vom Substrat | | | | | | | |

Beispiel 5

Zusammensetzung des Primers:

| Rohstoff / Komponente | Masseprozent |
|---|---|
| Primer-Haftklebstoff 1 (30 Gewichtsprozent Feststoffanteil) | 11,20 |
| Tyzor AA | 0,02 |
| Hardlen F 6P | 1,50 |
| Epikote 828 | 0,20 |
| Desmophen A 365 BA/X 65% | 2,60 |
| Xiameter OFS-6040 Silane | 0,50 |
| Tinopal OB | 0,02 |
| Cyclohexan | 45,07 |
| Xylol | 21,96 |
| Ethylbenzol | 4,65 |

(fortgesetzt)

| Rohstoff / Komponente | Masseprozent |
|---|---|
| Isopropanol | 10,40 |
| Ethylacetat | 1,88 |

Der Primer wurde in den folgenden Kombinationen geprüft, wobei die folgenden Ergebnisse erhalten wurden:

| Testklebeband | Substrat | Klebkraft (300mm/min) (N/cm) | | Wiederablösbarkeit (30 mm/min) | | Klebkraft nach Klimalagerung (N/cm) | |
|---|---|---|---|---|---|---|---|
| | | nach 30 min | nach 3 d | nach 1 min | nach 3 min | a) 2 Wo 85°C/ 85% rel. Feuchte | b) 2 Wo Klimawechsel |
| 1 | PP/EPDM | 36 (50%K) | 64 (K) | adhäsiv ablösbar | adhäsiv ablösbar | 65 (K) | 60 (K) |
| 2 | Feuerverzinkter Stahl | 65 (K) | 66 (K) | adhäsiv ablösbar | adhäsiv ablösbar | 63 (K) | 63 (K) |
| 2 | ABS | 64 (K) | 73 (K) | adhäsiv ablösbar | adhäsiv ablösbar | 67 (K) | 68 (90%K) |
| 2 | PC | 65 (K) | 71 (K) | adhäsiv ablösbar | adhäsiv ablösbar | 65 (90%K) | 68 (90%K) |
| 2 | PVC | 65 (K) | 69 (K) | adhäsiv ablösbar | adhäsiv ablösbar | 61 (K) | 64 (K) |
| 1 | PP | 21 (10%K) | 59 (30%K) | adhäsiv ablösbar | adhäsiv ablösbar | 52 (10%K) | 56 (20%K) |
| K = Kohäsive Spaltung des Klebebandes (Prozentangabe bezieht sich auf den kohäsiven Anteil) A = Adhäsives Ablösen des Klebebandes vom Primer oder des Primers vom Substrat | | | | | | | |

Beispiel 6

Zusammensetzung des Primers:

| Rohstoff / Komponente | Masseprozent |
|---|---|
| Primer-Haftklebstoff 2 (30 Gewichtsprozent Feststoffanteil) | 11,20 |
| Aluminiumacetylacetonat | 0,02 |
| Hardlen F 6P | 1,50 |
| Epikote 828 | 0,20 |
| Desmophen A 365 BA/X 65% | 2,60 |
| Xiameter OFS-6040 Silane | 0,50 |
| Tinopal OB | 0,02 |
| Cyclohexan | 45,07 |
| Xylol | 21,96 |
| Ethylbenzol | 4,65 |
| Isopropanol | 10,40 |

(fortgesetzt)

| Rohstoff / Komponente | Masseprozent |
|---|---|
| Ethylacetat | 1,88 |

Der Primer wurde in den folgenden Kombinationen geprüft, wobei die folgenden Ergebnisse erhalten wurden:

| Testklebeband | Substrat | Klebkraft (300mm/min) (N/cm) | | Wiederablösbarkeit (30 mm/min) | | Klebkraft nach Klimalagerung (N/cm) | |
|---|---|---|---|---|---|---|---|
| | | nach 30 min | nach 3 d | nach 1 min | nach 3 min | a) 2 Wo 85°C/ 85% rel. Feuchte | b) 2 Wo Klimawechsel |
| 1 | PP/EPDM | 31 (20%K) | 68 (K) | adhäsiv ablösbar | adhäsiv ablösbar | 60 (K) | 57 (K) |
| 2 | Feuerverzinkter Stahl | 63 (K) | 64 (K) | adhäsiv ablösbar | adhäsiv ablösbar | 60 (K) | 65 (K) |
| 2 | ABS | 65 (K) | 68 (K) | adhäsiv ablösbar | adhäsiv ablösbar | 62 (80%K) | 62 (80%K) |
| 2 | PC | 66 (K) | 70 (K) | adhäsiv ablösbar | adhäsiv ablösbar | 64 (90%K) | 60 (90%K) |
| 2 | PVC | 62 (K) | 68 (K) | adhäsiv ablösbar | adhäsiv ablösbar | 59 (90%K) | 60 (90%K) |
| 1 | PP | 10 (A) | 50 (20%K) | adhäsiv ablösbar | adhäsiv ablösbar | 42 (A) | 49 (A) |
| K = Kohäsive Spaltung des Klebebandes (Prozentangabe bezieht sich auf den kohäsiven Anteil) A = Adhäsives Ablösen des Klebebandes vom Primer oder des Primers vom Substrat | | | | | | | |

Beispiel 7

Zusammensetzung des Primers:

| Rohstoff / Komponente | Masseprozent |
|---|---|
| Primer-Haftklebstoff 3 (30 Gewichtsprozent Feststoffanteil) | 11,20 |
| Aluminiumacetylacetonat | 0,02 |
| Hardlen F 6P | 1,50 |
| Epikote 828 | 0,20 |
| Desmophen A 365 BA/X 65% | 2,60 |
| Xiameter OFS-6040 Silane | 0,50 |
| Tinopal OB | 0,02 |
| Cyclohexan | 45,07 |
| Xylol | 21,96 |
| Ethylbenzol | 4,65 |
| Isopropanol | 10,40 |
| Ethylacetat | 1,88 |

Der Primer wurde in den folgenden Kombinationen geprüft, wobei die folgenden Ergebnisse erhalten wurden:

| Testklebeband | Substrat | Klebkraft (300mm/min) (N/cm) | | Wiederablösbarkeit (30 mm/min) | | Klebkraft nach Klimalagerung (N/cm) | |
|---|---|---|---|---|---|---|---|
| | | nach 30 min | nach 3 d | nach 1 min | nach 3 min | a) 2 Wo 85°C/ 85% rel. Feuchte | b) 2 Wo Klimawechsel |
| 1 | PP/EPDM | 29 (10%K) | 71 (K) | adhäsiv ablösbar | adhäsiv ablösbar | 48 (90%K) | 51 (90%K) |
| 2 | Feuerverzinkter Stahl | 65 (K) | 68 (K) | adhäsiv ablösbar | adhäsiv ablösbar | 62 (K) | 63 (K) |
| 2 | ABS | 68 (K) | 69 (K) | adhäsiv ablösbar | adhäsiv ablösbar | 60 (70%K) | 66 (80%K) |
| 2 | PC | 63 (K) | 66 (K) | adhäsiv ablösbar | adhäsiv ablösbar | 61 (80%K) | 63 (80%K) |
| 2 | PVC | 65 (K) | 71 (K) | adhäsiv ablösbar | adhäsiv ablösbar | 61 (90%K) | 63 (K) |
| 1 | PP | 13 (A) | 44 (10%K) | adhäsiv ablösbar | adhäsiv ablösbar | 32 (A) | 29 (A) |

K = Kohäsive Spaltung des Klebebandes (Prozentangabe bezieht sich auf den kohäsiven Anteil)
A = Adhäsives Ablösen des Klebebandes vom Primer oder des Primers vom Substrat

Beispiel 8

Zusammensetzung des Primers:

| Rohstoff / Komponente | Masseprozent |
|---|---|
| Primer-Haftklebstoff 4 (30 Gewichtsprozent Feststoffanteil) | 11,20 |
| Tyzor AA | 0,02 |
| Hardlen F 6P | 1,50 |
| Epikote 828 | 0,20 |
| Desmophen A 365 BA/X 65% | 2,60 |
| Xiameter OFS-6040 Silane | 0,50 |
| Cyclohexan | 45,09 |
| Xylol | 21,96 |
| Ethylbenzol | 4,65 |
| Isopropanol | 10,40 |
| Ethylacetat | 1,88 |

Der Primer wurde in den folgenden Kombinationen geprüft, wobei die folgenden Ergebnisse erhalten wurden:

| Testklebeband | Substrat | Klebkraft (300mm/min) (N/cm) | | Wiederablösbarkeit (30 mm/min) | | Klebkraft nach Klimalagerung (N/cm) | |
|---|---|---|---|---|---|---|---|
| | | nach 30 min | nach 3 d | nach 1 min | nach 3 min | a) 2 Wo 85°C/ 85% rel. Feuchte | b) 2 Wo Klimawechsel |
| 1 | PP/EPDM | 31 (20%K) | 66 (K) | adhäsiv ablösbar | adhäsiv ablösbar | 64 (K) | 63 (K) |
| 2 | Feuerverzinkter Stahl | 61 (K) | 68 (K) | adhäsiv ablösbar | adhäsiv ablösbar | 67 (K) | 59 (K) |
| 2 | ABS | 60 (K) | 69 (K) | adhäsiv ablösbar | adhäsiv ablösbar | 59 (K) | 55 (90%K) |
| 2 | PC | 66 (K) | 65 (K) | adhäsiv ablösbar | adhäsiv ablösbar | 60 (K) | 62 (K) |
| 2 | PVC | 67 (K) | 65 (K) | adhäsiv ablösbar | adhäsiv ablösbar | 59 (90%K) | 58 (90%K) |
| 1 | PP | 25 (A) | 62 (10%K) | adhäsiv ablösbar | adhäsiv ablösbar | 42 (10%K) | 46 (A) |

K = Kohäsive Spaltung des Klebebandes (Prozentangabe bezieht sich auf den kohäsiven Anteil)
A = Adhäsives Ablösen des Klebebandes vom Primer oder des Primers vom Substrat

Beispiel 9

Zusammensetzung des Primers:

| Rohstoff / Komponente | Masseprozent |
|---|---|
| Primer-Haftklebstoff 1 (30 Gewichtsprozent Feststoffanteil) | 11,90 |
| Tyzor AA | 0,02 |
| Hardlen F 6P | 1,50 |
| Desmophen A 365 BA/X 65% | 2,60 |
| Cyclohexan | 45,09 |
| Xylol | 21,96 |
| Ethylbenzol | 4,65 |
| Isopropanol | 10,40 |
| Ethylacetat | 1,88 |

Der Primer wurde in den folgenden Kombinationen geprüft, wobei die folgenden Ergebnisse erhalten wurden:

| Testklebeband | Substrat | Klebkraft (300mm/min) (N/cm) | | Wiederablösbarkeit (30 mm/min) | | Klebkraft nach Klimalagerung (N/cm) | |
|---|---|---|---|---|---|---|---|
| | | nach 30 min | nach 3 d | nach 1 min | nach 3 min | a) 2 Wo 85°C/ 85% rel. Feuchte | b) 2 Wo Klimawechsel |
| 1 | PP/EPDM | 25 (30%K) | 60 (K) | adhäsiv ablösbar | adhäsiv ablösbar | 65 (K) | 63 (K) |
| 2 | Feuerverzinkter Stahl | 61 (K) | 62 (K) | adhäsiv ablösbar | adhäsiv ablösbar | 68 (K) | 69 (K) |
| 2 | ABS | 67 (K) | 70 (K) | adhäsiv ablösbar | adhäsiv ablösbar | 62 (K) | 66 (90%K) |
| 2 | PC | 71 (K) | 64 (K) | adhäsiv ablösbar | adhäsiv ablösbar | 57 (80%K) | 60 (80%K) |
| 2 | PVC | 70 (K) | 65 (K) | adhäsiv ablösbar | adhäsiv ablösbar | 52 (70%K) | 49 (60%K) |
| 1 | PP | 15 (A) | 61 (10%K) | adhäsiv ablösbar | adhäsiv ablösbar | 49 (10%K) | 56 (20%K) |
| K = Kohäsive Spaltung des Klebebandes (Prozentangabe bezieht sich auf den kohäsiven Anteil) A = Adhäsives Ablösen des Klebebandes vom Primer oder des Primers vom Substrat | | | | | | | |

Beispiel 10

Zusammensetzung des Primers:

| Rohstoff / Komponente | Masseprozent |
|---|---|
| Primer-Haftklebstoff 1 (30 Gewichtsprozent Feststoffanteil) | 13,00 |
| Tyzor AA | 0,03 |
| Hardlen F 6P | 1,50 |
| Xiameter OFS-6040 Silane | 0,50 |
| Cyclohexan | 45,08 |
| Xylol | 22,96 |
| Ethylbenzol | 4,65 |
| Isopropanol | 10,40 |
| Ethylacetat | 1,88 |

Der Primer wurde in den folgenden Kombinationen geprüft, wobei die folgenden Ergebnisse erhalten wurden:

| Testklebeband | Substrat | Klebkraft (300mm/min) (N/cm) | | Wiederablösbarkeit (30 mm/min) | | Klebkraft nach Klimalagerung (N/cm) | |
|---|---|---|---|---|---|---|---|
| | | nach 30 min | nach 3 d | nach 1 min | nach 3 min | a) 2 Wo 85°C/ 85% rel. Feuchte | b) 2 Wo Klimawechsel |
| 1 | PP/EPDM | 20 (10%K) | 62 (K) | adhäsiv ablösbar | adhäsiv ablösbar | 60 (K) | 59 (K) |
| 2 | Feuerverzinkter Stahl | 59 (K) | 65 (K) | adhäsiv ablösbar | adhäsiv ablösbar | 59 (K) | 58 (K) |
| 2 | ABS | 62 (K) | 66 (K) | adhäsiv ablösbar | adhäsiv ablösbar | 57 (K) | 65 (K) |
| 2 | PC | 65 (K) | 63 (K) | adhäsiv ablösbar | adhäsiv ablösbar | 62 (80%K) | 55 (70%K) |
| 2 | PVC | 72 (K) | 66 (K) | adhäsiv ablösbar | adhäsiv ablösbar | 61 (70%K) | 61 (90%K) |
| 1 | PP | 10 (A) | 45 (A) | adhäsiv ablösbar | adhäsiv ablösbar | 28 (A) | 36 (10%K) |
| K = Kohäsive Spaltung des Klebebandes (Prozentangabe bezieht sich auf den kohäsiven Anteil) A = Adhäsives Ablösen des Klebebandes vom Primer oder des Primers vom Substrat | | | | | | | |

Beispiel 11

Zusammensetzung des Primers:

| Rohstoff / Komponente | Masseprozent |
|---|---|
| Primer-Haftklebstoff 1 (30 Gewichtsprozent Feststoffanteil) | 13,00 |
| Tyzor AA | 0,03 |
| Hardlen F 6P | 1,50 |
| Epikote 828 | 0,20 |
| Cyclohexan | 45,08 |
| Xylol | 22,96 |
| Ethylbenzol | 4,65 |
| Isopropanol | 10,70 |
| Ethylacetat | 1,88 |

Der Primer wurde in den folgenden Kombinationen geprüft, wobei die folgenden Ergebnisse erhalten wurden:

| Testklebeband | Substrat | Klebkraft (300mm/min) (N/cm) | | Wiederablösbarkeit (30 mm/min) | | Klebkraft nach Klimalagerung (N/cm) | |
|---|---|---|---|---|---|---|---|
| | | nach 30 min | nach 3 d | nach 1 min | nach 3 min | a) 2 Wo 85°C/ 85% rel. Feuchte | b) 2 Wo Klimawechsel |
| 1 | PP/EPDM | 18 (A) | 65 (K) | adhäsiv ablösbar | adhäsiv ablösbar | 66 (K) | 62 (K) |
| 2 | Feuerverzinkter Stahl | 61 (K) | 65 (K) | adhäsiv ablösbar | adhäsiv ablösbar | 64 (K) | 58 (K) |
| 2 | ABS | 66 (K) | 66 (K) | adhäsiv ablösbar | adhäsiv ablösbar | 59 (K) | 61 (K) |
| 2 | PC | 64 (K) | 73 (K) | adhäsiv ablösbar | adhäsiv ablösbar | 54 (80%K) | 61 (70%K) |
| 2 | PVC | 69 (K) | 70 (K) | adhäsiv ablösbar | adhäsiv ablösbar | 57 (70%K) | 55 (60%K) |
| 1 | PP | 22 (A) | 55 (10%K) | adhäsiv ablösbar | adhäsiv ablösbar | 58 (10%K) | 46 (10%K) |
| K = Kohäsive Spaltung des Klebebandes (Prozentangabe bezieht sich auf den kohäsiven Anteil) A = Adhäsives Ablösen des Klebebandes vom Primer oder des Primers vom Substrat | | | | | | | |

Vergleichsbeispiel 1

Zusammensetzung des Vergleichsprimers:

| Rohstoff / Komponente | Masseprozent |
|---|---|
| Primer-Haftklebstoff 1 (30 Gewichtsprozent Feststoffanteil) | 13,00 |
| Hardlen F 6P | 1,50 |
| Epikote 828 | 0,20 |
| Cyclohexan | 45,11 |
| Xylol | 22,96 |
| Ethylbenzol | 4,65 |
| Isopropanol | 10,70 |
| Ethylacetat | 1,88 |

Der Primer wurde in den folgenden Kombinationen geprüft, wobei die folgenden Ergebnisse erhalten wurden:

| Testklebeband | Substrat | Klebkraft (300mm/min) (N/cm) | | Wiederablösbarkeit (30 mm/min) | |
|---|---|---|---|---|---|
| | | nach 30 min | nach 3 d | nach 1 min | nach 3 min |
| 1 | PP/EPDM | 4 (A) | 6 (A) | adhäsiv ablösbar | adhäsiv ablösbar |
| 2 | Feuerverzinkter Stahl | 3 (A) | 5 (A) | adhäsiv ablösbar | adhäsiv ablösbar |
| K = Kohäsive Spaltung des Klebebandes (Prozentangabe bezieht sich auf den kohäsiven Anteil) A = Adhäsives Ablösen des Klebebandes vom Primer oder des Primers vom Substrat | | | | | |

Vergleichsbeispiel 2

Zusammensetzung des Vergleichsprimers:

| Rohstoff / Komponente | Masseprozent |
|---|---|
| Primer-Haftklebstoff 1 (30 Gewichtsprozent Feststoffanteil) | 13,00 |
| Tyzor AA | 1,00 |
| Hardlen F 6P | 1,50 |
| Epikote 828 | 0,20 |
| Cyclohexan | 45,01 |
| Xylol | 22,06 |
| Ethylbenzol | 4,65 |
| Isopropanol | 10,70 |
| Ethylacetat | 1,88 |

Der Primer wurde in den folgenden Kombinationen geprüft, wobei die folgenden Ergebnisse erhalten wurden:

| Testklebeband | Substrat | Klebkraft (300mm/min) (N/cm) | | Wiederablösbarkeit (30 mm/min) | |
|---|---|---|---|---|---|
| | | nach 30 min | nach 3 d | nach 1 min | nach 3 min |
| 1 | PP/EPDM | 6 (A) | 9 (A) | adhäsiv ablösbar | adhäsiv ablösbar |
| 2 | Feuerverzinkter Stahl | 5 (A) | 8 (A) | adhäsiv ablösbar | adhäsiv ablösbar |
| K = Kohäsive Spaltung des Klebebandes (Prozentangabe bezieht sich auf den kohäsiven Anteil) A = Adhäsives Ablösen des Klebebandes vom Primer oder des Primers vom Substrat | | | | | |

Vergleichsbeispiel 3

Zusammensetzung des Vergleichsprimers:

| Rohstoff / Komponente | Masseprozent |
|---|---|
| Primer-Haftklebstoff 5 (30 Gewichtsprozent Feststoffanteil) | 13,00 |
| Tyzor AA | 0,03 |
| Hardlen F 6P | 1,50 |
| Epikote 828 | 0,20 |
| Cyclohexan | 45,41 |
| Xylol | 22,63 |
| Ethylbenzol | 4,65 |
| Isopropanol | 10,70 |
| Ethylacetat | 1,88 |

Der Primer wurde in den folgenden Kombinationen geprüft, wobei die folgenden Ergebnisse erhalten wurden:

| Testklebeband | Substrat | Klebkraft (300mm/min) (N/cm) | | Wiederablösbarkeit (30 mm/min) | |
|---|---|---|---|---|---|
| | | nach 30 min | nach 3 d | nach 1 min | nach 3 min |
| 1 | PP/EPDM | 2 (A) | 7 (A) | adhäsiv ablösbar | adhäsiv ablösbar |
| 2 | Feuerverzinkter Stahl | 4 (A) | 6 (A) | adhäsiv ablösbar | adhäsiv ablösbar |
| K = Kohäsive Spaltung des Klebebandes (Prozentangabe bezieht sich auf den kohäsiven Anteil) A = Adhäsives Ablösen des Klebebandes vom Primer oder des Primers vom Substrat | | | | | |

**Patentansprüche**

1. Primer, umfassend eine in einem oder mehreren Lösemitteln gelöste oder dispergierte Mischung aus

   I) einem Haftklebstoff, umfassend zumindest eine Basispolymerkomponente erhältlich durch radikalische Copolymerisation folgender Monomere:

      a) mindestens einem Acrylsäureester eines linearen, primären Alkohols mit 2 bis 10 Kohlenstoffatomen im Alkylrest des Alkohols,
      b) mindestens einem Acrylsäureester eines verzweigten, nichtzyklischen Alkohols mit 4 bis 12 Kohlenstoffatomen im Alkylrest des Alkohols,
      c) 8 bis 15 Masseprozent Acrylsäure, bezogen auf die Summe der Monomere,
      d) optional bis zu 10 Masseprozent weiterer copolymerisierbarer Monomere, bezogen auf die Summe der Monomere,

   II) mindestens einem thermischen Vernetzer auf Basis eines Metallacetylacetonats, eines Metallalkoxids oder eines Alkoxy-Metallacetylacetonats,
   III) mindestens einem chlorierten Polyolefin,

   **dadurch gekennzeichnet, dass**
   die Konzentration der Summe der thermischen Vernetzer bezogen auf die Summe der Basispolymerkomponenten des Haftklebstoffs im Bereich von 0,05 Masseprozent bis 5,0 Masseprozent beträgt und
   das Verhältnis der Summe der Basispolymerkomponente [Komponente I] des Haftklebstoffs zu der Summe der chlorierten Polyolefine [Komponente III] in der Mischung im Bereich von 30 : 70 bis 95 : 5 Masseanteilen liegt.

2. Primer gemäß Anspruch 1, **dadurch gekennzeichnet, dass**
   das chlorierte Polyolefin [Komponente III] mit einer a, β-ungesättigten Carbonsäure oder deren Anhydrid, insbesondere mit Maleinsäureanhydrid und / oder mit einem Acrylat modifiziert ist.

3. Primer gemäß einem der vorangehenden Ansprüche, **dadurch gekennzeichnet, dass** das Verhältnis der Summe der Acrylsäureester eines linearen, primären Alkohols [Komponente I)a)] zu der Summe der Acrylsäureester eines verzweigten, nichtzyklischen Alkohols [Komponente I)b)] im Bereich von 10 : 90 bis 90 : 10 Masseanteilen, bevorzugt von 20 : 80 bis 80 : 20 liegt.

4. Primer gemäß einem der vorangegangenen Ansprüche, **dadurch gekennzeichnet, dass**
   die zumindest eine Basispolymerkomponente mindestens 90 Masseprozent, bevorzugt mindestens 95 Masseprozent, besonders bevorzugt mindestens 98 Masseprozent des Haftklebstoffs [Komponente I] ausmachen, oder, sofern mehrere Basispolymerkomponenten auf Basis der Komponenten I)a) bis I)d) vorhanden sind, die Summe der Basispolymerkomponeten mindestens 90 Masseprozent, bevorzugt mindestens 95 Masseprozent, besonders bevorzugt mindestens 98 Masseprozent des Haftklebstoffs [Komponente I] ausmachen.

5. Primer gemäß einem der vorangegangenen Ansprüche, **dadurch gekennzeichnet, dass** die Mischung frei von Blockcopolymeren des Typs Polystyrol/Polydien oder Polystyrol/hydriertes Polydien ist.

6. Primer gemäß einem der vorangegangenen Ansprüche, **dadurch gekennzeichnet, dass**
   das Metall des thermischen Vernetzers Titan, Aluminium, Zirkonium, Zink oder Eisen ist.

**7.** Primer gemäß einem der vorangegangenen Ansprüche, **dadurch gekennzeichnet, dass** die Mischung zusätzlich ein oder mehrere Epoxidharze enthält.

**8.** Primer gemäß einem der vorangegangenen Ansprüche, **dadurch gekennzeichnet, dass** die Mischung zusätzlich ein oder mehrere Styrolacrylatharze enthält.

**9.** Primer gemäß einem der vorangegangenen Ansprüche, **dadurch gekennzeichnet, dass** die Mischung zusätzlich ein oder mehrere organofunktionelle Silane enthält.

**10.** Primer gemäß einem der vorangegangenen Ansprüche, **dadurch gekennzeichnet, dass** die Mischung zusätzlich einen oder mehrer fluoreszierende optischen Aufheller enthält.

**11.** Primer gemäß einem der vorangegangenen Ansprüche, **dadurch gekennzeichnet, dass** die Konzentration der Mischung in dem einen oder den mehreren Lösemitteln im Bereich von 0,1 bis maximal 30 Masseprozent, bevorzugt im Bereich von 0,5 bis 20 Masseprozent, besonders bevorzugt im Bereich von 1,0 bis 10 Masseprozent beträgt.

**12.** Primer gemäß einem der vorangegangenen Ansprüche, **dadurch gekennzeichnet, dass** das eine bzw. die mehreren Lösemittel organische Lösemittel sind.

**13.** Primer gemäß einem der vorangegangenen Ansprüche, **dadurch gekennzeichnet, dass** eines der Lösemittel Isopropanol oder ein anderer Alkohol ist.

**14.** Verwendung eines Primers gemäß einem der vorangegangenen Ansprüche zur Herstellung einer haftvermittelnden Schicht.

**15.** Verfahren zum Herstellen einer haftvermittelnden Schicht auf einem Substrat, umfassend das Aufbringen eines Primers gemäß einem der Ansprüche 1 bis 13 auf ein Substrat, und das Verdunsten lassen des einen oder der mehreren Lösemittel.

**Claims**

**1.** Primer comprising a mixture, in dispersion or solution in one or more solvents, of

I) a pressure-sensitive adhesive comprising at least one base polymer component obtainable by radical copolymerization of monomers below:

a) at least one acrylic ester of a linear, primary alcohol having 2 to 10 carbon atoms in the alcohol alkyl radical,
b) at least one acrylic ester of a branched, noncyclic alcohol having 4 to 12 carbon atoms in the alcohol alkyl radical,
c) 8 to 15 mass percent of acrylic acid, based on the sum of the monomers,
d) optionally up to 10 mass percent of other copolymerizable monomers, based on the sum of the monomers,

II) at least one thermal crosslinker based on a metal acetylacetonate, a metal alkoxide, or an alkoxy-metal acetylacetonate,
III) at least one chlorinated polyolefin,

**characterized in that**
the concentration of the sum of the thermal crosslinkers, based on the sum of the base polymer components of the pressure-sensitive adhesive, is in the range from 0.05 mass percent to 5.0 mass percent, and
the ratio of the sum of the base polymer component [component I] of the pressure-sensitive adhesive to the sum of the chlorinated polyolefins [component III] in the mixture is in the range from 30:70 to 95:5 mass fractions.

**2.** Primer according to Claim 1, **characterized in that**
the chlorinated polyolefin [component III] has been modified with an $\alpha,\beta$-unsaturated carboxylic acid or anhydride thereof, more particularly with maleic anhydride and/or with an acrylate.

**3.** Primer according to either of the preceding claims, **characterized in that**
the ratio of the sum of the acrylic esters of a linear, primary alcohol [component I)a)] to the sum of the acrylic esters of a branched, noncyclic alcohol [component I)b)] is in the range from 10:90 to 90:10 mass fractions, preferably from 20:80 to 80:20.

**4.** Primer according to any of the preceding claims, **characterized in that**
the at least one base polymer component makes up at least 90 mass percent, preferably at least 95 mass percent, more preferably at least 98 mass percent of the pressure-sensitive adhesive [component I], or, if there are two or more base polymer components based on components I)a) to I)d), the sum of the base polymer components makes up at least 90 mass percent, preferably at least 95 mass percent, more preferably at least 98 mass percent of the pressure-sensitive adhesive [component I].

**5.** Primer according to any of the preceding claims, **characterized in that** the mixture is free from block copolymers of the polystyrene/polydiene or polystyrene/hydrogenated polydiene type.

**6.** Primer according to any of the preceding claims, **characterized in that**
the metal of the thermal crosslinker is titanium, aluminum, zirconium, zinc or iron.

**7.** Primer according to any of the preceding claims, **characterized in that**
the mixture further comprises one or more epoxy resins.

**8.** Primer according to any of the preceding claims, **characterized in that**
the mixture further comprises one or more styrene acrylate resins.

**9.** Primer according to any of the preceding claims, **characterized in that**
the mixture further comprises one or more organofunctional silanes.

**10.** Primer according to any of the preceding claims, **characterized in that** the mixture further comprises one or more fluorescent optical brighteners.

**11.** Primer according to any of the preceding claims, **characterized in that**
the concentration of the mixture in the one or more solvents is in the range from 0.1 to a maximum of 30 mass percent, preferably in the range from 0.5 to 20 mass percent, more preferably in the range from 1.0 to 10 mass percent.

**12.** Primer according to any of the preceding claims, **characterized in that**
the solvent or the two or more solvents are organic solvents.

**13.** Primer according to any of the preceding claims, **characterized in that** one of the solvents is isopropanol or another alcohol.

**14.** Use of a primer according to any of the preceding claims for producing an adhesion-promoting layer.

**15.** Method for producing an adhesion-promoting layer on a substrate, comprising applying a primer according to any of claims 1 to 13 to a substrate,
and causing or allowing the evaporation of the one or more solvents.

**Revendications**

**1.** Apprêt, comprenant un mélange dissous ou dispersé dans un ou plusieurs solvants, de

I) un adhésif de contact, comprenant au moins un composant polymère de base pouvant être obtenu par copolymérisation radicalaire des monomères suivants :

a) au moins un ester de l'acide acrylique d'un alcool primaire linéaire contenant 2 à 10 atomes de carbone dans le radical alkyle de l'alcool,
b) au moins un ester de l'acide acrylique d'un alcool ramifié non cyclique contenant 4 à 12 atomes de carbone dans le radical alkyle de l'alcool,

c) 8 à 15 pour cent en masse d'acide acrylique, par rapport à la somme des monomères,
d) éventuellement jusqu'à 10 pour cent en masse d'autres monomères copolymérisables, par rapport à la somme des monomères,

II) au moins un agent de réticulation thermique à base d'un acétylacétonate de métal, d'un alcoxyde de métal ou d'un acétylacétonate d'alcoxy-métal,
III) au moins une polyoléfine chlorée,

**caractérisé en ce que**
la concentration de la somme des agents de réticulation thermiques par rapport à la somme des composants polymères de base de l'adhésif de contact est dans la plage allant de 0,05 pour cent en masse à 5,0 pour cent en masse, et
le rapport entre la somme du composant polymère de base [composant I] de l'adhésif de contact et la somme des polyoléfines chlorées [composant III] dans le mélange se situe dans la plage allant de 30:70 à 95:5 parties en masse.

2. Apprêt selon la revendication 1, **caractérisé en ce que** la polyoléfine chlorée [composant III] est modifiée avec un acide carboxylique $\alpha,\beta$-insaturé ou son anhydride, notamment avec de l'anhydride de l'acide maléique et/ou avec un acrylate.

3. Apprêt selon l'une quelconque des revendications précédentes, **caractérisé en ce que** le rapport entre la somme des esters de l'acide acrylique d'un alcool primaire linéaire [composant I)a)] et la somme des esters de l'acide acrylique d'un alcool ramifié non cyclique [composant I)b)] se situe dans la plage allant de 10:90 à 90:10 parties en masse, de préférence de 20:80 à 80:20.

4. Apprêt selon l'une quelconque des revendications précédentes, **caractérisé en ce que** ledit au moins un composant polymère de base représente au moins 90 pour cent en masse, de préférence au moins 95 pour cent en masse, de manière particulièrement préférée au moins 98 pour cent en masse de l'adhésif de contact [composant I] ou, si plusieurs composants polymères de base à base des composants I)a) à I)d) sont présents, la somme des composants polymères de base représente au moins 90 pour cent en masse, de préférence au moins 95 pour cent en masse, de manière particulièrement préférée au moins 98 pour cent en masse de l'adhésif de contact [composant I].

5. Apprêt selon l'une quelconque des revendications précédentes, **caractérisé en ce que** le mélange est exempt de copolymères séquencés de type polystyrène/polydiène ou polystyrène/polydiène hydrogéné.

6. Apprêt selon l'une quelconque des revendications précédentes, **caractérisé en ce que** le métal de l'agent de réticulation thermique est le titane, l'aluminium, le zirconium, le zinc ou le fer.

7. Apprêt selon l'une quelconque des revendications précédentes, **caractérisé en ce que** le mélange contient en outre une ou plusieurs résines époxyde.

8. Apprêt selon l'une quelconque des revendications précédentes, **caractérisé en ce que** le mélange contient en outre une ou plusieurs résines d'acrylate de styrène.

9. Apprêt selon l'une quelconque des revendications précédentes, **caractérisé en ce que** le mélange contient en outre un ou plusieurs silanes organofonctionnels.

10. Apprêt selon l'une quelconque des revendications précédentes, **caractérisé en ce que** le mélange contient en outre un ou plusieurs azurants optiques fluorescents.

11. Apprêt selon l'une quelconque des revendications précédentes, **caractérisé en ce que** la concentration du mélange dans le ou les solvants est dans la plage allant de 0,1 à au plus 30 pour cent en masse, de préférence dans la plage allant de 0,5 à 20 pour cent en masse, de manière particulièrement préférée dans la plage allant de 1,0 à 10 pour cent en masse.

12. Apprêt selon l'une quelconque des revendications précédentes, **caractérisé en ce que** le ou les solvants sont des solvants organiques.

13. Apprêt selon l'une quelconque des revendications précédentes, **caractérisé en ce qu'**un des solvants est l'isopropanol ou un autre alcool.

14. Utilisation d'un apprêt selon l'une quelconque des revendications précédentes pour la fabrication d'une couche de promoteur d'adhésion.

15. Procédé de fabrication d'une couche de promoteur d'adhésion sur un substrat, comprenant l'application d'un apprêt selon l'une quelconque des revendications 1 à 13 sur un substrat et l'évaporation du ou des solvants.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008094721 A1
- JP 2008156566 A
- WO 02100961 A1
- WO 03052021 A1
- EP 833865 B1
- EP 833866 B1

- EP 739383 B1
- US 5602202 A
- WO 03035779 A
- JP 57198763 A
- JP 58032661 A
- DE 102010062669

**In der Beschreibung aufgeführte Nicht-Patentliteratur**

- **J.BIELEMANN.** Lackadditive. 1998, 114-129

- *T.G. Fox, Bull. Am. Phys. Soc.,* 1956, vol. 1, 123